(19) Europäisches Patentamt / European Patent Office / Office européen des brevets

(11) **EP 3 274 639 B1**

(12) **FASCICULE DE BREVET EUROPEEN**

(45) Date de publication et mention de la délivrance du brevet:
**26.12.2018 Bulletin 2018/52**

(21) Numéro de dépôt: **16716490.4**

(22) Date de dépôt: **23.03.2016**

(51) Int Cl.:
*F25B 17/08* (2006.01)          *F25B 27/00* (2006.01)
*F28D 20/00* (2006.01)          *F24S 10/70* (2018.01)

(86) Numéro de dépôt international:
**PCT/EP2016/056382**

(87) Numéro de publication internationale:
**WO 2016/151017 (29.09.2016 Gazette 2016/39)**

(54) **DISPOSITIF SOLAIRE DE PRODUCTION AUTONOME DE FROID PAR SORPTION SOLIDE-GAZ**

SOLARE EINRICHTUNG ZUR AUTONOMEN ADSORPTIONSKÄLTEHERSTELLUNG

SOLAR DEVICE FOR AUTONOMEOUS PRODUCTION OF COLD BY ADSORPTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2015 FR 1552396**

(43) Date de publication de la demande:
**31.01.2018 Bulletin 2018/05**

(73) Titulaire: **Centre National de la Recherche Scientifique (CNRS)**
**75016 Paris (FR)**

(72) Inventeurs:
• **STITOU, Driss**
  **66570 Saint Nazaire en Roussillon (FR)**
• **MAURAN, Sylvain**
  **66170 Millas (FR)**
• **MAZET, Nathalie**
  **66100 Perpignan (FR)**

(74) Mandataire: **IPAZ**
**18 rue de la République**
**34000 Montpellier (FR)**

(56) Documents cités:
**WO-A1-86/00691     FR-A1- 2 679 633**

## Description

### Domaine technique

La présente invention concerne un dispositif solaire de production autonome de froid.

La présente invention se situe dans les domaines de la climatisation solaire autonome et la réfrigération solaire autonome.

### Etat de la technique antérieure

L'exploitation de l'énergie solaire pour produire du froid est particulièrement adaptée pour la production de froid dans des sites isolés de régions climatiques chaudes et/ou n'ayant pas accès au réseau électrique et où l'approvisionnement en énergie est couteux.

De nombreuses techniques sont connues et permettent une production de froid réalisée soit de manière concomitante à la disponibilité de l'énergie solaire diurne, soit de manière déphasée, durant la nuit.

Les solutions actuelles reposent essentiellement sur des technologies à compresseur, fortement consommatrices d'énergie électrique et utilisant des fluides frigorigènes ayant un fort potentiel d'effet de serre. Pour les sites isolés, ces solutions conduisent par exemple à produire l'électricité par des groupes électrogènes utilisant un combustible stocké dans des cuves, ou à stocker l'électricité produite le jour par des panneaux photovoltaïques dans un parc de batteries. Ces solutions nécessitent selon le cas une maintenance élevée, un réapprovisionnement fréquent en combustible (hebdomadaire à mensuel), un remplacement périodique du parc de batterie (2 à 5 ans), ainsi que des dispositifs électroniques de contrôle/commande avancés (régulateur de charge, onduleurs...).

Plus particulièrement, une première technique pour produire du froid durant le jour consiste à convertir le rayonnement solaire soit en électricité via des capteurs photovoltaïques, soit en travail via un cycle moteur thermodynamique comme par exemple un cycle de Rankine organique moteur, pour ensuite alimenter un cycle thermodynamique inverse de production de froid par détente (cycle Stirling) ou vaporisation d'un réfrigérant(cycle inverse de Rankine).

Une seconde technique consiste à utiliser directement le rayonnement solaire sous forme thermique pour alimenter un procédé à sorption de gaz de type absorption liquide/gaz, qui nécessite la circulation d'une solution binaire ou saline, telle que les solutions d'ammoniac/eau ou d'eau/bromure de lithium classiquement utilisées. De tels dispositifs sont par exemple décrits dans les documents US 4207744 et US 4184338.

Ces techniques sont cependant relativement complexes et couteuses à mettre en oeuvre et requièrent notamment des procédures avancées de contrôle et de commande dudit procédé de production du froid, notamment des pompes de circulation et des compresseurs pour faire circuler les fluides de travail, et/ou nécessitent des températures ambiantes peu élevées (inférieures à 35°C) pour produire efficacement du froid. Ces contraintes affectent ainsi la fiabilité et la robustesse de ces procédés.

Une autre technique repose sur des procédés de sorption d'un fluide réfrigérant gazeux par un solide actif. Il s'agit par exemple de procédés thermochimiques ou des procédés à adsorption. L'inconvénient de tels procédés repose sur la nature solide des matériaux sorbants utilisés : ils ont un fonctionnement discontinu et conduisent à une production intermittente de froid, telle que décrite par exemple dans les documents US 4586345, US 4993234 ou WO 86/00691. Le dernier document dévoile un dispositif selon le préambule de la revendication 1.

La présente invention a pour objet de répondre au moins en grande partie aux problèmes précédents et de conduire en outre à d'autres avantages.

Un autre but de l'invention est de résoudre au moins un de ces problèmes par un nouveau dispositif de production de froid.

Un autre but de la présente invention est de produire du froid de manière autonome.

Un autre but de la présente invention est de réduire les coûts pour produire du froid.

Un autre but de la présente invention est de réduire la pollution associée à la production de froid.

Un autre but de la présente invention est de produire du froid de manière plus fiable et plus robuste.

Un autre but de la présente invention est de réduire les impératifs de maintenance associés à la production de froid.

### Exposé de l'invention

On atteint au moins l'un des objectifs précités avec un dispositif selon la revendication 1, ledit dispositif étant un dispositif de production autonome de froid à partir d'une source thermique solaire basse température comprise entre 50 °C et 130 °C, ledit froid produit étant produit avec une différence de température inférieure de 5 °C à 40 °C par rapport à la température ambiante de l'environnement extérieur et ledit dispositif mettant un oeuvre un procédé de sorption thermochimique d'un réfrigérant par un réactif solide, ledit dispositif comprenant :

- un réacteur agencé pour contenir le réactif solide et comprenant au moins un échangeur thermique pour refroidir et/ou chauffer le réacteur,
- un condenseur apte à liquéfier le réfrigérant gazeux venant du réacteur,
- un premier réservoir pour stocker à température ambiante le réfrigérant liquide produit par le condenseur,
- une enceinte agencée pour stocker un matériau à changement de phase et comprenant par ailleurs un évaporateur en contact direct avec ledit matériau à changement de phase et apte à évaporer le réfrigérant liquide,
- un second réservoir pour stocker le réfrigérant liquide à une température inférieure à la température ambiante, et collaborant d'une part avec le premier réservoir et d'autre part avec l'évaporateur et le réacteur,
- au moins un moyen de conduction du réfrigérant agencé pour faire circuler ledit réfrigérant sous forme liquide ou gazeuse entre le réacteur, le premier réservoir, le second réservoir et l'évaporateur,
- au moins un moyen de contrôle du débit du réfrigérant opérant sur les moyens de conduction, ledit au moins un moyen de contrôle étant agencé pour réguler le débit du réfrigérant de manière autonome en fonction des pressions régnant dans le réacteur, les premier et second réservoirs, le condenseur et l'évaporateur.

Préférentiellement, le froid produit par le dispositif selon l'invention est à une température comprise entre -10 °C et 20 °C.

Ainsi, le dispositif selon l'invention et ses variantes décrites ci-après, permet d'une part de réaliser de manière efficace le chauffage solaire du réacteur et le refroidissement du condenseur au cours de la journée, ainsi que le refroidissement du réacteur au cours de la nuit.

La gestion des phases diurne et nocturne étant réalisée de manière totalement autonome et sans contrôle actif est une solution prometteuse pour satisfaire les besoins en froid dans des sites isolés de régions climatiques chaudes n'ayant pas accès au réseau électrique. Et le dispositif selon l'invention permet ainsi de réduire les coûts de production car il n'y a pas d'apport extérieur en énergie couteuse. Par ailleurs, comme il n'utilise pas de consommables, la maintenance du dispositif - qui se limite au nettoyage occasionnel des capteurs - est très réduite et peu coûteuse.

Le dispositif selon l'invention permet aussi de réduire la pollution associée à la production de froid car il peut mettre en oeuvre un fluide réfrigérant qui n'impact ni l'ozone ni le réchauffement climatique. Par ailleurs le dispositif ne génère aucun gaz à effet de serre et n'épuise pas les ressources énergétiques fossiles puisque il utilise uniquement l'énergie solaire thermique, énergie renouvelable et disponible en abondance. Par ailleurs, le dispositif selon l'invention est complètement silencieux, ce qui représente un avantage notable dans les environnements urbains ou dans des paysages exceptionnels et/ou protégés.

Enfin, le dispositif selon l'invention ne comporte pas de pièces mécaniques en mouvement ce qui permet ainsi de réduire à la fois le niveau sonore de fonctionnement, mais aussi l'usure des composants et les risques de fuite du fluide par des garnitures d'étanchéité dynamique : le dispositif selon l'invention est plus fiable.

Il est aussi plus robuste du fait de son fonctionnement entièrement autonome et auto-adaptatif aux conditions extérieures d'ensoleillement et de température ; dépourvu de tout organe de contrôle/commande et/ou de régulation électronique, il fait montre d'une très grande longévité : les composites réactifs mis en oeuvre dans les réacteurs du dispositif selon l'invention ont été testés sur plus de 30 000 cycles (correspondant à environ 80 ans de fonctionnement quotidien) sans qu'aucune perte de performance n'ait été observée.

A titre d'exemples non limitatifs, le réfrigérant peut être pris parmi l'eau, l'ammoniac, la éthylamine, la méthylamine ou le méthanol ; et le solide réactif peut être choisi par exemple parmi les chlorures de calcium ($CaCl_2$), de baryum ($BaCl_2$) ou de strontium ($SrCl_2$). D'une manière plus générale, le dispositif selon l'invention met en oeuvre préférentiellement un réfrigérant différent des hydrochlorofluorocarbures et chlorofluorocarbures qui appauvrissent la couche d'ozone et participent au réchauffement climatique.

Les matériaux à changement de phase utilisés dans la présente invention pour stocker de manière efficace le froid produit en se solidifiant sont préférentiellement des composés organiques ou inorganiques. A titre d'exemples non limitatifs, il peut s'agir par exemple de l'eau, d'une solution aqueuse ou d'une paraffine.

Les moyens de contrôle du débit du réfrigérant permettent avantageusement de réguler ledit débit de manière passive, uniquement en fonction des différences de pression régnant entre le réacteur, le condenseur, l'évaporateur et les premier et second réservoirs au cours des phases de régénération diurne et de production nocturne de froid.

Avantageusement, l'enceinte et/ou le second réservoir peuvent être isolés thermiquement afin de réduire les besoins énergétiques nécessaires au maintien de la température à l'intérieur et de maintenir une température du réfrigérant liquide inférieure à la température ambiante durant le jour, évitant ainsi que la température du réfrigérant contenu dans l'évaporateur n'augmente au cours de la journée

De manière préférentielle, l'évaporateur peut être alimenté en réfrigérant liquide depuis le second réservoir par différence de densité dudit réfrigérant entre l'entrée et la sortie dudit évaporateur. Ce fonctionnement par thermosiphon permet de générer un flux du réfrigérant entre le second réservoir et l'évaporateur sans pompe et sans apports d'énergie extérieur, favorisant ainsi l'autonomie du dispositif selon l'invention.

De manière préférentielle, le réacteur peut comprendre par ailleurs un caisson isotherme agencé pour contenir l'échangeur thermique et/ou le réacteur et apte à réduire les pertes thermiques dudit réacteur, notamment par conduction. L'isolation peut être obtenue par tout moyen isolant connu résistant aux variations de température subies par le réacteur au cours de la nuit et de la journée, comme par exemple de la laine de verre ou de la laine de roche.

De manière avantageuse, le réacteur peut être constitué d'une pluralité d'éléments tubulaires comprenant le réactif solide et reliés entre eux par lesdits moyens de conduction du réfrigérant afin d'exploiter le rayonnement solaire de manière maximale et d'optimiser le chauffage du réacteur. En effet, il est avantageux de maximiser d'une part la surface d'absorption solaire et d'autre part l'orientation dudit réacteur par rapport au soleil. Ainsi, la configuration en éléments tubulaires permet de maximiser à la fois la surface active du réacteur et l'incidence directe du soleil sur ledit réacteur.

Préférentiellement, la pluralité d'éléments tubulaires peut être revêtue d'un revêtement absorbant solaire pour améliorer le rendement thermique de la pluralité d'éléments tubulaires, ledit revêtement étant en contact intime avec la paroi de la pluralité d'éléments tubulaires.

A titre d'exemples non limitatifs, il peut s'agir d'une simple peinture solaire ou d'un film métallique (cuivre, aluminium...) ayant une bonne conductivité thermique et placé en contact thermique avec la paroi des éléments tubulaires et sur lequel il peut être déposé une couche mince sélective.

Avantageusement, le revêtement absorbant solaire peut présenter une faible émissivité infrarouge.

Selon un mode de réalisation particulier, le réacteur peut comprendre par ailleurs au moins un élément couvrant et transparent au rayonnement solaire, agencé pour réduire les pertes thermiques et maximiser le rendement de captation solaire, ledit au moins un élément couvrant s'étendant au-delà de la face du réacteur exposée au soleil.

Optionnellement, l'au moins un élément couvrant peut par ailleurs être opaque au rayonnement infrarouge afin de favoriser l'effet de serre.

Préférentiellement, au moins une des faces non exposées au soleil du réacteur peut être isolée thermiquement pour réduire les pertes thermiques. L'isolation peut être obtenue par tout moyen isolant connu, comme par exemple de la laine de verre ou de la laine de roche.

Selon un mode de réalisation particulier, le réacteur peut comprendre en outre des moyens de motorisation afin d'orienter la pluralité d'éléments tubulaires du réacteur selon un plan sensiblement perpendiculaire à la direction du soleil et de présenter ainsi une surface d'absorption solaire maximale, afin d'optimiser l'orientation du réacteur et de maximiser le rendement de captation solaire et les échanges thermiques associés.

Selon une première version du dispositif selon l'invention, le refroidissement nocturne du réacteur est assuré par circulation naturelle de l'air dans le réacteur, permettant ainsi de réaliser un refroidissement de manière totalement passive.

De manière avantageuse à cette première version, le réacteur peut comprendre par ailleurs au moins un volet d'aération de la pluralité d'éléments tubulaires, ledit au moins un volet étant situé en partie haute et/ou en partie basse dudit réacteur.

Et préférentiellement, l'au moins un volet d'aération peut être agencé pour assurer l'étanchéité du réacteur lorsqu'il est en position fermée afin de favoriser les échanges thermiques à l'intérieur dudit réacteur.

Avantageusement, l'au moins un volet d'aération peut comprendre par ailleurs un moyen d'entrainement pour assurer son ouverture et/ou sa fermeture.

Selon une première variante le moyen d'entrainement peut consister en un moteur électrique de faible puissance.

Avantageusement, le moteur électrique peut être alimenté par un dispositif de production et/ou de stockage d'énergie électrique, éventuellement alimenté par des panneaux photovoltaïques.

Selon une deuxième variante, le moyen d'entrainement peut consister en un dispositif de pignons et crémaillère actionné par un vérin rotatif à air comprimé relié à une réserve d'air comprimée.

Préférentiellement, la réserve d'air comprimé peut être rechargée par un compresseur d'air alimenté par des panneaux photovoltaïques.

Selon une troisième variante, le moyen d'entrainement peut consister en un dispositif de pignons et crémaillère actionné par un vérin linéaire hydraulique simple effet commandé par un bulbe thermostatique en contact thermique avec une plaque absorbante exposée au soleil. Cette dernière variante est entièrement passive, énergétiquement autonome et autocontrôlée.

De manière préférentielle, la pluralité d'éléments tubulaires peut comprendre par ailleurs une pluralité d'ailettes circulaires dont la base est en contact thermique intime avec la paroi des éléments tubulaires afin de favoriser les échanges thermiques.

Et avantageusement, la pluralité d'ailettes peut être recouverte d'un revêtement absorbant solaire pour favoriser les échanges thermiques.

De manière avantageuse, la pluralité d'éléments tubulaires peuvent être disposés horizontalement afin d'améliorer l'écoulement de l'air autour desdits éléments tubulaires.

Préférentiellement, le condenseur peut être de type échangeur à tubes à ailettes et refroidit, de jour, par convection naturelle de l'air autour desdits tubes à ailettes.

Selon une deuxième version du dispositif selon l'invention, le refroidissement nocturne du réacteur peut être assuré par une boucle caloduc fonctionnant en thermosiphon et comprenant :

- un fluide de travail apte à réaliser un travail thermodynamique,

- un évaporateur, dit de boucle caloduc, coopérant avec la pluralité d'éléments tubulaires du réacteur et agencé pour évaporer le fluide de travail et absorber la chaleur dégagée par le réacteur,

- un condenseur, dit de boucle caloduc, coopérant avec l'évaporateur et le réacteur, ledit condenseur étant agencé pour liquéfier le fluide de travail et réaliser un transfert thermique avec l'air extérieur,

- un réservoir de fluide de travail agencé pour stocker ledit fluide de travail liquide et permettre le remplissage optimal de l'au moins un élément tubulaire du réacteur en fluide de travail,

- un dispositif passif et autonome de contrôle du débit du fluide de travail dans la boucle caloduc comprenant :

  - un premier moyen de contrôle du débit du fluide de travail, situé entre le réservoir de fluide de travail et la partie basse de l'au moins un moyen de conduction du fluide de travail, ledit premier moyen de contrôle étant agencé pour contrôler l'alimentation en fluide de travail liquide de l'au moins un moyen de conduction du fluide de travail,

  - un second moyen de contrôle du débit du fluide de travail, situé entre la sortie de l'évaporateur de boucle caloduc et le condenseur de boucle caloduc, agencé pour contrôler le passage du fluide de travail gazeux dans l'au moins un moyen de conduction du fluide de travail.

Cette deuxième version du refroidissement du dispositif selon l'invention permet ainsi de réaliser de manière efficace à la fois le chauffage du réacteur durant le jour et le refroidissement d'une part du réacteur durant la nuit et d'autre part du condenseur de réfrigérant gazeux noyé dans le réservoir de fluide de travail de la boucle caloduc.

De manière préférentielle, le fluide de travail est choisi parmi ceux qui présentent une température d'ébullition à la pression atmosphérique comprise entre 0 et 40°C et qui présentent, dans la gamme de température de 20 à 100°C, une pression comprise entre 1 et 10 bars. A titre d'exemple non limitatif, il peut s'agir des hydrocarbures paraffiniques de type C4, C5 ou C6 (tel que le butane, le methylpropane, le pentane, le methylbutane, le dimethylpropane, l'hexane, le methylpentane, le dimethylbutane,...), des fluides de travail de type HFC utilisés classiquement dans les cycles de Rankine organique (R236fa, R236ea, R245fa, R245ca, FC3110, RC318,...), des fluides inorganiques (ammoniac, eau), ou des alcools (méthanol, éthanol,..).

Avantageusement, le dispositif selon ce deuxième mode de réalisation peut comprendre par ailleurs une vanne de mise en opération de la boucle caloduc, agencée pour remplir ladite boucle caloduc en fluide de travail et/ou la purger.

De manière préférentielle, l'évaporateur de boucle caloduc peut comprendre au moins un moyen de conduction du fluide de travail disposé à l'intérieur de la pluralité d'éléments tubulaires du réacteur et en contact thermique intime avec le réactif solide, lesdits au moins un moyen de conduction du fluide de travail associés à chaque élément tubulaire étant reliés entre eux par des collecteurs en parties haute et basse.

Avantageusement la pluralité d'éléments tubulaire du réacteur peut être inclinée verticalement afin de faciliter le déplacement du fluide de travail par simple gravité.

Avantageusement, le condenseur de boucle caloduc, peut être composé d'au moins un tube à ailettes et reliés entre eux par des moyens de conduction du fluide de travail.

De manière préférentielle, les au moins un tubes à ailettes du condenseur peuvent être disposés de manière sensiblement horizontale à l'arrière du réacteur, avec une légère inclinaison pour permettre l'écoulement par gravité du fluide de travail liquéfié vers le réservoir de fluide de travail.

Préférentiellement, le réservoir de fluide de travail peut être agencé pour maintenir un niveau minimal de fluide de travail dans les moyens de conduction dudit fluide de travail compris entre le tiers et les trois-quarts de la hauteur de d'un élément tubulaire du réacteur.

Et le réservoir de fluide de travail peut être agencé pour évaporer le réfrigérant et comprend par ailleurs le condenseur de réfrigérant agencé pour liquéfier ledit réfrigérant.

Avantageusement, le dispositif de contrôle du débit du fluide de travail dans la boucle caloduc peut comprendre par ailleurs au moins un moyen de commande autonome, agencé pour respectivement ouvrir et fermer les premier et second moyens de contrôle du débit du fluide de travail, par exemple en début de nuit et début de journée.

Et préférentiellement, l'au moins un moyen de commande autonome des premier et second moyens de contrôle du débit du fluide de travail peut comprendre :

- une plaque absorbante apte à absorber le rayonnement solaire et à émettre dans l'infrarouge, ladite plaque absorbante étant agencée pour chauffer grâce au rayonnement solaire diurne et refroidir durant la nuit,

- un bulbe thermostatique en contact thermique avec la plaque absorbante, comprenant un fluide apte à se dilater sous l'effet d'une variation de température,

- un élément de liaison coopérant d'une part avec le bulbe thermostatique et d'autre part avec le premier et/ou le second moyen de contrôle du débit du fluide de travail, ledit élément de liaison étant agencé pour ouvrir ou fermer ledit moyen de contrôle du débit du fluide de travail.

Selon un autre mode de réalisation de l'invention compatible avec chacune des variantes précédentes, le dispositif selon l'invention peut consister en une architecture modulaire comprenant :

- d'une pluralité de premiers ensembles comprenant chacun :

  - le réacteur constitué d'une pluralité d'éléments tubulaires et comprenant l'échangeur thermique,

  - le condenseur apte à liquéfier le réfrigérant,

  - le réservoir pour stocker le réfrigérant à température ambiante et dont le volume correspond au volume de la pluralité d'éléments tubulaire dudit premier ensemble,

  - des moyens de contrôle du débit du réfrigérant,

- d'un second ensemble comprenant :

  - l'enceinte agencée pour stocker un matériau à changement de phase et comportant une isolation thermique,

  - le second réservoir pour stocker le réfrigérant liquide à une température inférieure à la température ambiante et comportant une isolation thermique,

  - l'évaporateur pour évaporer le réfrigérant, situé dans l'enceinte et coopérant avec le second réservoir,

  - des premiers moyens de contrôle du débit du réfrigérant entre l'évaporateur et le second réservoir,

  - des seconds moyens de contrôle du débit du réfrigérant pour assurer la connexion entre le second ensemble et la pluralité de premiers ensembles.

Cette disposition modulaire permet ainsi de faciliter la mise en oeuvre et l'installation du dispositif.

Avantageusement, l'évaporateur peut être de type noyé et comprendre au moins un élément tubulaire agencé pour faire circuler le réfrigérant par thermosiphon avec le second réservoir.

De manière préférentielle, le second ensemble peut comprendre une vanne d'isolement étanche, agencée pour remplir le dispositif en fluide réfrigérant et/ou pour le purger.

Et préférentiellement, le réfrigérant peut être de l'ammoniac.

Selon un autre aspect de l'invention, il est proposé d'utiliser le dispositif selon l'invention pour produire de la glace.

Alternativement, le dispositif selon l'invention peut aussi être utilisé pour produire de l'eau, la production d'eau étant réalisée par condensation de la vapeur d'eau contenue dans l'air sur une paroi maintenue froide par le dispositif.

**Description des figures et des modes de réalisation**

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

- la figure 1 illustre un diagramme de Clausius Clapeyron des états thermodynamiques des composants du dispositif selon l'invention au cours des deux phases principales,

- la figure 2 illustreun schéma de principe du dispositif thermochimique de production de froid selon l'invention,

- la figure 3 illustre la phase diurne du fonctionnement du dispositif selon l'invention, consistant en une phase de régénération solaire et de production d'énergie,

- la figure 4 illustre la phase nocturne du fonctionnement du dispositif selon l'invention, consistant en une phase de production de froid,

- les figures 5a et 5b illustrent respectivement un schéma de profil et de face d'un réacteur comprenant l'échangeur thermique du dispositif selon l'invention et selon un premier mode de réalisation dans lequel le refroidissement nocturne est assuré par convection naturelle,

- la figure 6 illustre un mode particulier de commande autonome d'un volet d'aération pour le chauffage diurne et le refroidissement nocturne du réacteur selon l'invention,

- la figure 7 illustre un schéma d'un réacteur comprenant l'échangeur thermique du dispositif selon l'invention et selon un second mode de réalisation dans lequel le refroidissement nocturne est assuré par une boucle caloduc,

- les figures 8a et 8b illustrent respectivement l'état diurne et l'état nocturne d'un moyen de commande autonome des premier et second moyens de contrôle du débit du fluide de travail dans la boucle caloduc,

- les figures 9a, 9b et 9c illustrent respectivement un schéma en vue de face, de profil et de détail d'un mode de réalisation particulier de réacteur comprenant l'échangeur thermique selon l'invention et refroidit par une boucle caloduc,

- la figure 10 illustre un mode particulier de réalisation de l'invention, dans lequel le dispositif de production autonome de froid est conçu de manière modulaire,

- la figure 11 illustre un schéma du module de production de froid du dispositif selon l'invention,

- les figures 12a, 12b et 12c illustrent respectivement une vue de face, une vue de coupe longitudinale et une vue de coupe transversale d'un évaporateur du dispositif modulaire selon l'invention.

Les modes de réalisation qui seront décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

**Le procédé de production de froid**

Le procédé solaire de production intermittente de froid, décrit ci-après et objet de la présente invention, est un procédé thermique de sorption thermochimique dont le principe repose sur le couplage d'un processus de changement d'état liquide/gaz d'un réfrigérant G et d'une réaction chimique renversable entre un solide réactif et ce réfrigérant:

$$S_1 + G_{(Gaz)} \leftrightarrows S_2 + Q_R \text{ et } G_{(Liq)} + Q_L \leftrightarrows G_{(Gaz)}$$

Dans le cas de la réaction de synthèse du solide $S_2$ de gauche à droite, le gaz réfrigérant G réagit avec le sel réactif $S_1$ pauvre en réfrigérant pour former le sel $S_2$ riche en réfrigérant. Cette réaction est exothermique et libère de la chaleur de réaction $Q_R$. Le gaz G absorbé par $S_1$ est par ailleurs produit par évaporation du liquide réfrigérant G en absorbant la chaleur latente $Q_L$.

Dans le sens inverse de droite à gauche, la réaction endothermique de décomposition de solide $S_2$ nécessite l'apport de chaleur $Q_R$ pour que le réactif $S_2$ libère à nouveau le gaz réfrigérant G. Il est alors condensé en libérant de la chaleur latente $Q_L$.

Ces processus sont mis en oeuvre dans deux réservoirs connectés et échangeant le gaz réfrigérant G, constituant ainsi un dipôle thermochimique et dans lequel le premier réservoir, constitué alternativement de l'évaporateur ou du condenseur est le siège du changement d'état du réfrigérant G. Le second réservoir est constitué du réacteur et contient le sel réactif solide réagissant de manière renversable avec le réfrigérant G.

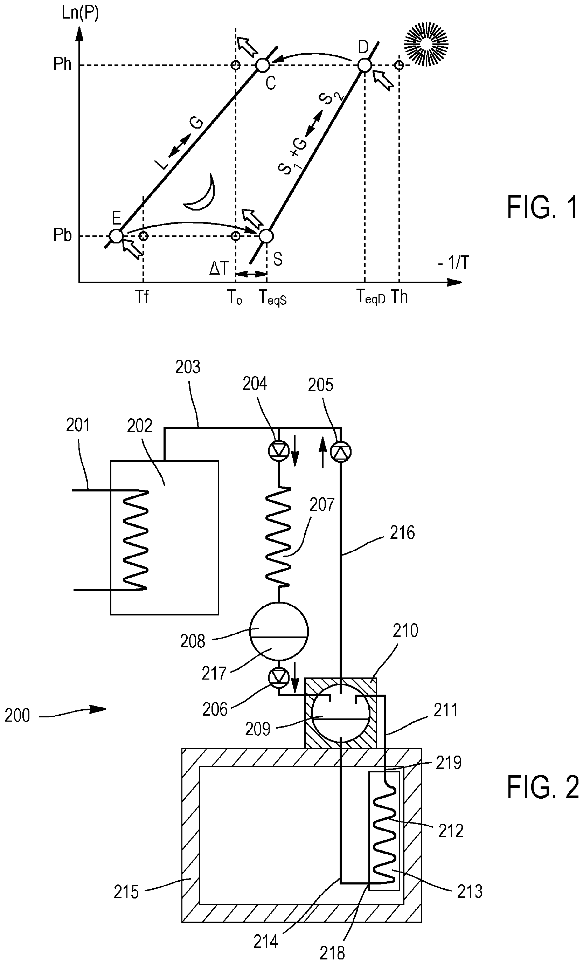

Les processus physico-chimiques mis en oeuvre dans un tel procédé thermochimique sont monovariant et, en référence à la FIGURE 1, les équilibres thermodynamiques mis en oeuvre au cours des deux phases principales du procédé selon l'invention peuvent être représentés par des droites dans un diagramme de Clausius Clapeyron :

$$Ln(P)=f(-1/T)$$

Chacune des droites représentées sur la FIGURE 1 décrit l'évolution de la température T et de la pression P à l'équilibre thermodynamique de chaque élément constituant le dispositif selon l'invention (réacteur, condenseur, réservoirs, évaporateur) et qui sera décrit dans les paragraphes suivants.

L'étape de régénération du dipôle thermochimique a lieu avec une pression haute Ph imposée soit par les conditions de chauffage réacteur en décomposition soit par les conditions de condensation du réfrigérant. En revanche, l'étape de production de froid a lieu à une basse pression Pb imposée par les conditions de refroidissement du réacteur en synthèse et la température de froid Tf produit à l'évaporateur.

**Description du dispositif selon l'invention**

Ainsi, pour mettre en oeuvre ce procédé thermochimique avec une source thermique solaire, le dispositif le plus simple selon l'invention comprend les éléments suivants cités en référence à la FIGURE 2 :

- un réacteur 202 où est confiné le réactif solide, muni d'au moins un échangeur thermique 201 pour le chauffage et le refroidissement du réacteur 202, et comportant un moyen de conduction 203 du réfrigérant avec le condenseur 207 ou l'évaporateur 212 ;

- un condenseur 207 muni d'un premier réservoir 208 stockant le réfrigérant liquide 217 condensé à la température ambiante ;

- un évaporateur 212 alimenté par exemple par thermosiphon, c'est-à-dire par différence de densité du réfrigérant entre l'entrée liquide 218 et la sortie diphasique 219dudit évaporateur 212, grâce à un second réservoir 209 pouvant être isolé thermiquement du milieu ambiant extérieur et contenant le réfrigérant liquide à la température du froid produit. L'évaporateur 212 est placé dans une enceinte 215 également isolé thermiquement ;

- des moyens de contrôle du débit du réfrigérant 204, 205 et 206, comme par exemple des clapets de retenue, permettent de gérer de manière autonome les flux du réfrigérant. Les moyens de contrôle 204, 205 d'une part et 206 d'autre part permettent respectivement de réguler le débit du réfrigérant sous forme gazeuse d'une part et liquide d'autre part. En effet, dans le cas d'une différence de pression entre l'amont et l'aval desdits moyens de contrôle 204 à 206, les clapets sont alors passants. A titre d'exemple, pour les clapets dits gazeux 204 et 205, une différence de pression inférieure à 100 mbar peut être est préférable pour assurer, le jour, une légère surpression dans le réacteur 202 par rapport au condenseur 207, et, la nuit, une légère dépression dans le réacteur 202 par rapport à l'évaporateur 212. En revanche, pour le clapet 206 installé sur la liaison liquide entre les premier 208 et second 209 réservoirs, une différence de pression correspondante à la différence entre la pression de condensation et la pression d'évaporation du réfrigérant peut être choisie préférentiellement. A titre d'exemple, cette dépression peut être de l'ordre de 5 à 10 bars.

**Fonctionnement du dispositif**

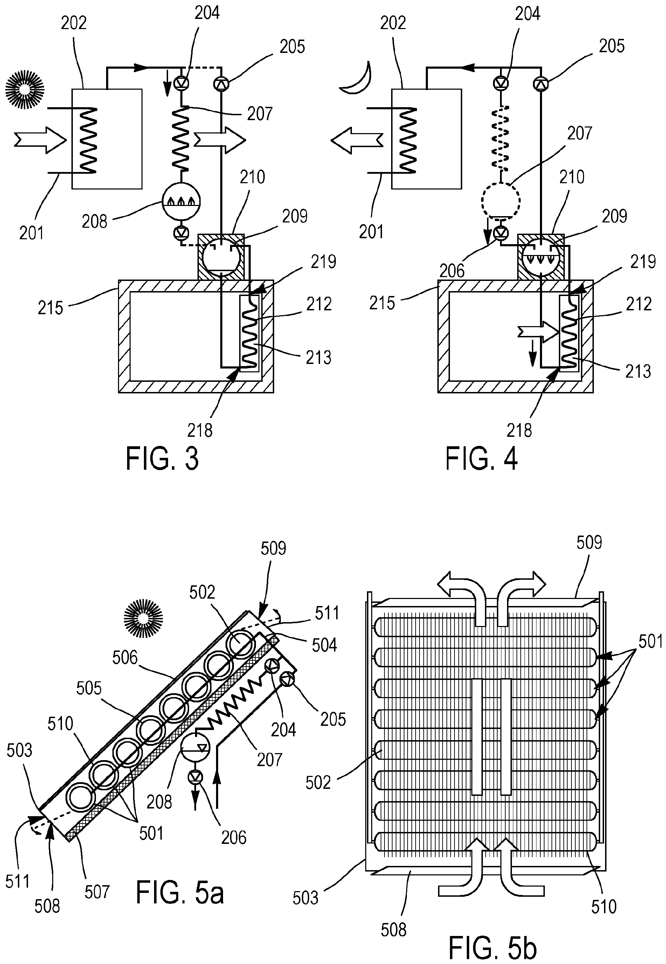

Le dispositif de production de froid solaire 200 selon l'invention, implique ainsi la transformation d'un solide réactif consommable disposé dans le réacteur 202 et fonctionne selon un mode intrinsèquement discontinu. Il comporte deux phases principales qui sont décrites ci-dessous en référence aux FIGURES 3 et 4:

- une phase diurne de régénération (FIGURE 3) au cours de laquelle le réacteur 202 est en liaison avec le condenseur 207. Cette phase consiste à chauffer le réacteur 202 jusqu'à une température Th dite haute, grâce à l'énergie thermique solaire incidente, permettant ainsi de décomposer le sel chargé S2 durant la journée. Le gaz réfrigérant G libéré par cette réaction, se condense d'abord dans le condenseur 207 à la température ambiante To puis est accumulé dans le premier réservoir 208 sous forme liquide, préférentiellement condensé ;

- une phase nocturne de production de froid (FIGURE 4) au cours de laquelle le réacteur 202 est en liaison avec l'évaporateur 212. Cette phase consiste à refroidir le réacteur 202 jusqu'à la température ambiante To. L'évaporateur 212 est le siège de réaction chimique produisant du froid en pompant d'une part la chaleur au milieu refroidir et dégageant d'autre pat le gaz réfrigérant G. Le sel S1 contenu dans le réacteur 202 réabsorbe alors le gaz G provenant de l'évaporateur 212 en dégageant de la chaleur de réaction à l'environnement à la température ambiante To. Le froid produit permet alors la solidification d'un matériau à changement de phase 213. A titre d'exemples non limitatifs, il peut s'agir par exemple de production de glace ou de solidification d'une paraffine. Le matériau à changement de phase 213 permet ainsi de stocker le froid produit la nuit pour le restituer à la demande tout au long de la journée.

Le fonctionnement dudit dispositif de production autonome de froid solaire 200 va maintenant être décrit en détail sur un cycle journalier.

En début de journée, le réacteur 202 est à une température proche de la température ambiante extérieure To et se trouve à une pression dite basse Pb (point S sur la FIGURE 1). Il est alors connecté à l'évaporateur 212 (point E sur la FIGURE 1) produisant du froid à une température dite du froid Tf ainsi que des vapeurs qui sont absorbées par le réacteur 202. La pression dans le réacteur 202 étant alors légèrement plus faible que celle de du réservoir 209 et de l'évaporateur 212 : la différence de pression est alors légèrement supérieure à la pression du clapet 205. Le jour se levant, le réacteur 202 est progressivement exposé au soleil et voit sa température augmenter : il commence alors à désorber le gaz réfrigérant G par décomposition du réactif. La pression dans le réacteur 202 s'élève alors et la différence de pression entre l'évaporateur 212 et le réacteur 202 se réduit. Lorsque la différence de pression devient inférieure à la pression d'ouverture du clapet de retenue 205, celui-ci se ferme et n'autorise alors plus le transfert de ces vapeurs vers le réacteur 202. La fermeture du clapet de retenue 205 permet d'augmenter plus rapidement la pression du réacteur 202 (évolution du point S vers le point D du réacteur le long de la droite d'équilibre de la FIGURE 1). L'intérêt conféré par le clapet de retenue 205 est de permettre ainsi de maintenir la température froide de l'enceinte à réfrigérer en empêchant que les vapeurs désorbées par le réacteur 202 sous l'action de l'exposition du réacteur 202 au soleil, puissent se condenser dans l'évaporateur 212 et faire remonter sa température.

Lorsque la pression du réacteur 202 devient légèrement supérieure à celle régnant dans le premier réservoir 208 de liquide condensé à la température ambiante To, le clapet 204 s'ouvre afin de refroidir et de condenser le gaz désorbé sortant du réacteur 202 à la température Th dans le condenseur 207. Le gaz condensé est alors stocké tout au long de la journée à la température ambiante diurne To dans le premier réservoir 208 (correspondant au point C sur la FIGURE 1).

Lorsque, à la tombée du jour, le rayonnement solaire n'est plus suffisant, la température régnant à l'intérieur du réacteur 202 commence à diminuer, induisant alors une diminution de la pression interne du réacteur 202. Le différentiel de pression entre le réacteur 202 et le condenseur 207 diminue et, au-delà d'un certain seuil, devient alors inférieure à la pression d'ouverture du clapet 204. Ce dernier se ferme alors et isole alors le réacteur 202, l'empêchant ainsi de réabsorber des vapeurs contenu dans le premier réservoir 208 à la température ambiante To. Le réacteur 202 est refroidi jusqu'à la température ambiante To, entrainant aussi une baisse de sa pression interne suivant son équilibre thermodynamique (correspondant à une migration du point D au point S sur la FIGURE 1).

En fonction des équilibres et des seuils choisis, des températures de froid Tf produit choisis et de la température ambiante extérieure To, deux modes de réalisation différents pour le refroidissement du réacteur 202 sont proposées et décrits dans les paragraphes suivants.

Le réacteur 202 se refroidissant, sa pression devient alors également inférieure à la pression régnant dans le second réservoir 209. Avantageusement, celui-ci peut être isolé thermiquement de l'extérieur afin de maintenir le réfrigérant liquide 218 contenu dans le réservoir 209 à une température inférieure à la température ambiante durant le jour, évitant ainsi que la température du réfrigérant contenu dans l'évaporateur 212 n'augmente au cours de la journée. De ce fait, la pression régnant dans le second réservoir 209 isolé thermiquement est plus faible que la pression régnant dans le premier réservoir non isolé 208. La diminution de pression permet alors au clapet 205, lorsqu'une certaine différence de pression correspondant au seuil d'ouverture du clapet est atteinte, de s'ouvrir, autorisant ainsi le réacteur 202 à aspirer et absorber chimiquement le gaz venant du second réservoir 209.

La pression diminue alors dans le second réservoir 209 et, lorsque la différence de pression avec le premier réservoir de liquide condensé 208 est suffisante, par exemple de l'ordre de quelques bars (typiquement de 1 à 10 bars), le clapet 206 s'ouvre et alimente le second réservoir 209 en liquide à la température nocturne To, jusqu'à ce que tout le réfrigérant liquide condensé contenu dans le premier réservoir 208 ait été transvasé dans le second réservoir 209 via le clapet 206. Le réacteur 202 continuant d'absorber les vapeurs produites par évaporation du liquide contenu dans le second réservoir 209, le liquide transvasé se refroidi alors jusqu'à ce que sa température soit inférieure au réfrigérant contenu dans l'évaporateur 212 maintenu en température supérieure par le PCM 213.

Dès lors, une circulation du réfrigérant est déclenchée naturellement, par thermosiphon, en exploitant la différence de densité du liquide réfrigérant, entre l'évaporateur 212 et le second réservoir 209. L'évaporateur 212 est alors alimenté par le bas 218 en réfrigérant liquide plus dense qu'en sa sortie diphasique 219. En effet, le réfrigérant sortant de l'évaporateur 212 par la sortie diphasique 219 est composé à la fois d'une phase liquide et d'une phase gazeuse, ce qui rend sa densité inférieure à celle du réfrigérant exclusivement liquide entrant dans l'évaporateur 212. Les vapeurs produites à l'évaporateur 212 sont alors aspirées dans le second réservoir 209 et absorbées par le réacteur 202 via le clapet 205. Le froid est ainsi produit à l'évaporateur 212 tout au long de la nuit jusqu'au lever du soleil quand le réacteur commence à être chauffé ;le froid produit durant la nuit est stocké dans le matériau à changement de phase 213 pour être délivré selon les besoins frigorifiques durant le jour.

**Chauffage solaire du réacteur**

Pour réaliser un chauffage efficace, l'échangeur thermique 201 du réacteur 202 doit présenter une surface d'absorption solaire la plus importante possible. Selon un mode de réalisation particulier, l'orientation optimale est obtenue en alignant l'échangeur thermique 201 vers la direction normale au soleil, c'est-à-dire par exemple incliné par rapport au sol d'un angle correspondant de préférence à une latitude proche de la latitude du lieu pour une production optimale de froid tout au long de l'année.

Un tel échangeur thermique 201, agencé pour exploiter le rayonnement solaire va maintenant être décrit, en référence notamment aux FIGURES 5a et 5b.

Pour exploiter le rayonnement solaire de manière maximale, et selon un mode de réalisation particulier, l'échangeur thermique 201 est couplé au réacteur 202 et est constitué d'un ensemble d'éléments tubulaires 501 comprenant le matériau réactif solide 502. Les éléments tubulaires 501 sont répartis - de préférence de manière uniforme - dans un caisson isotherme 503, et sont connectés les uns aux autres par des moyens de conduction 504 - par exemple des collecteurs, et mis en liaison avec le condenseur 207 et/ou l'évaporateur 212.

Selon un mode particulier de réalisation, les éléments tubulaires 501 sont recouverts d'un revêtement absorbant solaire 505, si possible sélectif, en contact intime avec la paroi des éléments tubulaires501. Le revêtement absorbant solaire 505 présente une forte absorptivité solaire et, avantageusement, une faible émissivité infrarouge.

Une couverture transparente au rayonnement solaire 506recouvrant la face avant de l'échangeur thermique 201 exposée au soleil permet de réduire les pertes thermiques par convection. Préférentiellement il peut également réduire les pertes par rayonnement et favoriser l'effet de serre, en bloquant le rayonnement infrarouge émis par les réacteurs portés à haute température. In fine, le rendement de captation solaire est maximisé.

Avantageusement, une isolation thermique 507- en utilisant par exemple de la laine de roche ou de verre - peut être mise en oeuvre sur la face arrière de l'échangeur thermique 201, afin de réduire les pertes thermiques par conduction et/ou convection vers le milieu ambiant extérieur.

**Refroidissement nocturne du réacteur**

Le refroidissement nocturne du réacteur 202 peut être réalisé selon deux modes de réalisation décrits ci-après et dont le choix dépend du réactif solide 502 utilisé dans le réacteur 202, de la température du froid Tf à produire et de la température ambiante nocturne To :

- le premier mode de réalisation pour le refroidissement du réacteur consiste en une circulation naturelle d'air dans ledit réacteur 202, par refroidissement externe des éléments tubulaires 501. Ce premier mode de réalisation peut être mis en oeuvre lorsque le réactif solide 502 permet d'obtenir un écart de température opératoire suffisamment élevé (typiquement supérieure à 20°C) entre la température nocturne de l'air extérieur To et la température d'équilibre de la réaction à la pression imposée par l'évaporation du réfrigérant à Tf dans l'évaporateur;

- le second mode de réalisation pour le refroidissement du réacteur 202 consiste en une boucle caloduc fonctionnant en thermosiphon ; il est choisi lorsque le refroidissement par circulation naturelle d'air ne peut pas être mis en oeuvre.

Chacun de ces deux modes de réalisation, ainsi que toutes les variantes qui les composent, sont compatibles avec l'un quelconque des modes de réalisation de l'invention déjà présenté ou présentés dans les paragraphes qui suivent.

**Premier mode de réalisation : refroidissement du réacteur par convection naturelle**

Les FIGURES 5a et 5b illustrent respectivement un schéma de profil et de face d'un réacteur 202 comprenant l'échangeur thermique 201 du dispositif 200 selon l'invention et selon ce premier mode de réalisation d'un refroidissement nocturne dudit réacteur 202 assuré par convection naturelle de l'air.

Ce refroidissement utilise ainsi la circulation d'air engendrée par effet cheminée dans le réacteur 202 grâce à l'ouverture des volets d'aération situés en partie haute 509 et basse 508 du réacteur 202.

Avantageusement, pour améliorer les échanges thermiques et l'évacuation de la chaleur, les éléments tubulaires 501 sont munis d'ailettes 510, par exemple circulaires, dont la base est en contact thermique intime avec la paroi des éléments tubulaires 501 du réacteur 202.

Avantageusement, leur disposition peut être horizontale afin d'améliorer le coefficient de convection thermique en favorisant un écoulement de l'air de manière sensiblement perpendiculaire à la direction des éléments tubulaires 501 dans le réacteur 202.

Enfin, pour absorber plus efficacement le rayonnement solaire, les ailettes 510 peuvent être recouvertes d'un revêtement absorbant solaire de manière comparable à celui pouvant recouvrir les éléments tubulaires 501.

Dans ce premier mode de réalisation pour le refroidissement du réacteur 202, le condenseur du gaz réactif 207, peut-être de type échangeur à tubes à ailettes et placé à l'arrière dudit réacteur 202. Il est alors refroidit le jour par convection naturelle de l'air sur les éléments tubulaires à ailettes.

Chaque volet d'aération 508, 509 comprend une plaque 511 agencée pour assurer une étanchéité à l'air sur le cadre du réacteur 202 le jour, et un axe de rotation actionné notamment au lever du jour pour fermer ledit volet 508, 509 et à la tombée de la nuit pour ouvrir ledit volet 508, 509.

Selon une variante avantageuse, le volet d'aération 508, 509 peut comprendre par ailleurs un moyen d'entrainement 600 agencé pour le mettre en rotation par le biais de divers dispositifs, commandés par exemple en fonction de la détection du lever ou le déclin du jour, une élévation de température (dispositif thermostatique) ou un seuil d'irradiation solaire.

Différentes variantes de ces moyens d'entrainement 600 sont proposées et décrits dans les paragraphes suivants. Elles sont toutes compatibles avec l'un quelconque des modes de réalisation de l'invention déjà présentés ou suivants.

## Première variante d'entrainement du volet d'aération

L'entrainement du volet d'aération 508, 509 peut être réalisé à l'aide d'un moteur électrique de faible puissance qui est, selon une variante avantageuse, alimenté par une batterie électrique rechargée par un capteur photovoltaïque. Typiquement, les besoins en puissance sont suffisamment faibles et ponctuels pour que la surface dudit capteur photovoltaïque soit inférieure au mètre-carré.

## Deuxième variante d'entrainement du volet d'aération

L'entrainement du volet d'aération 508, 509 peut aussi être réalisé à l'aide d'un dispositif de pignon/crémaillère pouvant être par exemple actionné par un vérin rotatif ¼ tour double-effet à air comprimé. Le vérin rotatif est alors relié à une réserve d'air comprimé (typiquement de 6 bar) via un distributeur pneumatique monostable 5/3 ou 4/3 qui est actionné sur une courte durée (commande impulsionnelle d'une dizaine de secondes) en fonction de l'irradiation solaire. La fermeture du volet d'aération est commandée lorsque l'irradiation est supérieure à un premier seuil (obtenu à proximité de l'instant du lever du soleil) et l'ouverture du volet est commandée lorsque que l'irradiation est inférieure à un second seuil (obtenu à proximité de l'instant du coucher du soleil). Avantageusement, le premier seuil de fermeture peut être supérieur au second seuil d'ouverture desdits volets.

La réserve d'air comprimé peut quant à elle être rechargée périodiquement par un compresseur d'air alimenté par des panneaux photovoltaïques.

## Troisième variante d'entrainement du volet d'aération

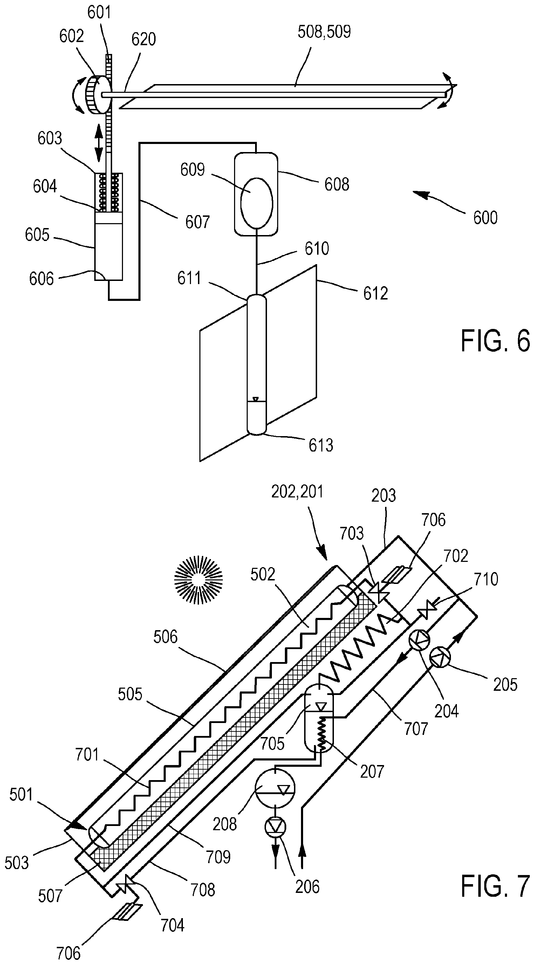

L'entrainement du volet d'aération 508, 509 peut aussi être réalisé à l'aide du dispositif 600 décrit sur la FIGURE 6. Il s'agit d'un dispositif de pignon/crémaillère 602/601 actionné par un vérin linéaire hydraulique 605 simple effet et commandé in fine par un bulbe thermostatique 611 en contact thermique avec une plaque absorbante 612 exposée au soleil.

Le bulbe thermostatique 611 contient un fluide 613 sensible aux variations de température. Plus particulièrement, le fluide 613 est apte à se vaporiser sur une plage de température comprise préférentiellement entre To et Th et qui correspond à une plage de pression compatible avec l'ouverture et la fermeture du volet d'aération 508, 509 qu'il commande. La vaporisation du fluide 613 permet de pressuriser le liquide hydraulique 606 contenu dans le vérin linéaire hydraulique 605 grâce à un accumulateur 608 contenant une vessie déformable 609, collaborant avec le bulbe thermostatique 611 et déformée par le fluide du 613.

Le liquide hydraulique 606 ainsi pressurisé permet de déplacer à la fois le piston 604 du vérin 605 et la crémaillère 601, mettant ainsi en rotation l'axe 620 du volet d'aération 508, 509 grâce au pignon d'entrainement 602.

Un ressort de rappel 603 permet de refouler le liquide hydraulique 606 vers l'accumulateur 608 lorsque la pression dans le bulbe thermostatique 611 diminue suite à une moindre exposition de la plaque absorbante solaire 608.

La quantité de fluide 613 contenu dans le bulbe thermostatique 611 est définie en fonction d'une part du volume de la vessie 609 pressurisant le liquide hydraulique 66 du vérin 605, et d'autre part de la pression maximale à atteindre pour actionner le volet d'aération 508, 509 et qui doit aussi correspondre à une température Ti intermédiaire située entre To et Th et pour laquelle il n'y a plus de fluide 613 à vaporiser.

Le dispositif selon ce mode de réalisation particulier est entièrement passif, autonome et autocontrôlé par l'intensité du rayonnement solaire.

## Second mode de réalisation : refroidissement du réacteur par boucle caloduc

Dans ce mode de réalisation, le refroidissement du réacteur 202 durant la nuit et/ou le refroidissement du condenseur du réfrigérant le jour est réalisé par une boucle caloduc. Il est ainsi possible de transférer de la chaleur en évaporant d'une part un fluide de travail ayant absorbé la chaleur dégagée par le réacteur 202 pendant la phase nocturne de production de froid ou par le condenseur 207 pendant la phase diurne de régénération du réacteur 202, et d'autre part en condensant ledit fluide de travail, libérant ainsi la chaleur précédemment absorbée directement vers l'air extérieur via le condenseur de boucle caloduc 702.

Pendant la nuit, un évaporateur de boucle caloduc 701, intégré aux éléments tubulaires 501, est alimenté en fluide de travail liquide et refroidit ainsi le réacteur 202 par évaporation du fluide de travail liquide. Les vapeurs ainsi produites se condensent à la température ambiante nocturne dans un condenseur de boucle caloduc 702. Le fluide de travail ainsi liquéfié coule par gravité dans le réservoir 705 grâce à la mise en communication via la tubulure 707entre ledit réservoir 705 et l'entrée du condenseur de caloduc 702.

Pendant le jour, l'évaporateur de boucle caloduc 701 intégré au réacteur 202 est inactif grâce à la fermeture de deux vannes 703, 704 placés entre l'évaporateur 701 et le condenseur 702 de la boucle caloduc. La première, 703, permet de contrôler le débit du fluide de travail au travers d'une liaison liquide située en partie basse ; tandis que la seconde, 704, permet de contrôler le débit du fluide de travail au travers d'une liaison gaz située en partie haute.

Ainsi lorsque le réacteur 202 est chauffé par le soleil durant la phase de régénération, la pression dans l'évaporateur de boucle caloduc 701, ainsi isolé, s'élève et provoque la vidange de l'évaporateur 701 en fluide de travail sous une forme liquide et par le bas : celui est alors stocké dans un réservoir de fluide de travail 705 grâce à une ligne de purge 709. De manière préférentielle, le réservoir de fluide de travail 705 est agencé pour stocker le fluide de travail liquide durant la purge de l'évaporateur intégré au réacteur. Le réacteur 202 est ainsi agencé pour monter en température et réaliser sa régénération le jour.

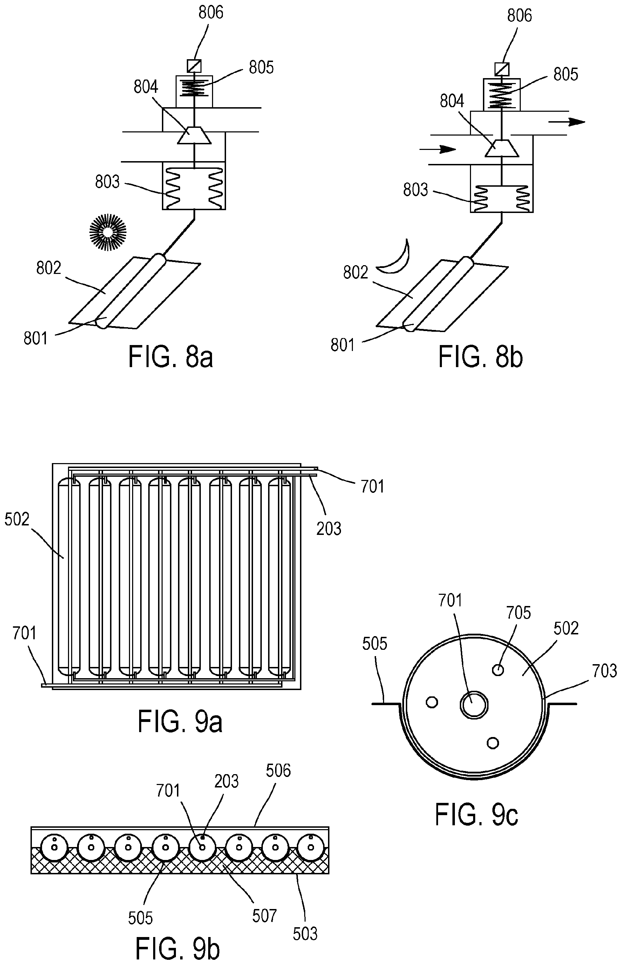

En référence aux FIGURES 7 et 9, la boucle caloduc de refroidissement du réacteur 202 comprend ainsi :

- un évaporateur de boucle caloduc 701 comprenant préférentiellement un tube 701 disposé à l'intérieur des éléments tubulaires 501 du réacteur 202 et avantageusement en contact thermique intime avec le matériau réactif solide 502. Les éléments tubulaires 501 d'un réacteur 202, inclinés verticalement, comprennent chacun un tube évaporateur 701 relié par des collecteurs en parties basse et haute ;
- un condenseur 702 de fluide de la boucle caloduc, comprenant préférentiellement un ensemble de tubes à ailettes reliés entre eux par des collecteurs-distributeurs, et échangeant directement avec l'air ambiant extérieur. Ces tubes à ailettes sont disposés préférentiellement horizontalement à l'arrière du réacteur 202, avec avantageusement une légère inclinaison permettant l'écoulement du fluide de travail condensé vers un réservoir de fluide de travail liquide et condensé705 ;
- un réservoir de fluide de travail liquide et condensé 705 dont la position permet avantageusement un remplissage correct en fluide de travail dans les tubes-évaporateurs 701 de la boucle caloduc. Selon un mode de réalisation particulier, le fluide de travail est préférentiellement maintenu à un niveau minimal de fluide de travail liquide dans les tubes-évaporateurs 701 compris entre le tiers et les trois-quarts de la hauteur du tube 701. Selon un autre mode de réalisation, le réservoir de fluide de travail liquide 705 comprend par

ailleurs le condenseur 207 pour condenser le gaz réactif libéré le jour par le réacteur 202 chauffé au soleil. Le réservoir de fluide de travail 705 joue ainsi la fonction d'évaporateur le jour. Les vapeurs du fluide de travail produites par la condensation du gaz réactif, sont alors acheminés au condenseur 702 via la conduite 707 ;

- un dispositif de régulation de l'écoulement du fluide de travail dans la boucle caloduc, activé de manière passive en début et fin de journée et comprenant :

  - une vanne 704 entre la sortie liquide 708 du réservoir de fluide de travail 705 et l'entrée liquide en partie basse des tubes évaporateur 701, permettant ainsi de les alimenter en fluide de travail tout au long de la nuit et d'en empêcher le remplissage le jour ;

- une vanne 703 placée sur la conduite vapeur de la boucle caloduc, entre la sortie vapeur de l'évaporateur 701 - en partie haute - et l'entrée vapeur du condenseur 702, permettant ainsi de bloquer, en début de journée, le passage de la vapeur formée dans les tubes-évaporateur 701 et d'en provoquer une élévation de la pression. Cette élévation de pression, permet de chasser plus efficacement le fluide de travail contenu dans les tubes-évaporateur 701 et de les vider par l'intermédiaire d'une conduite de purge 709 qui débouche dans le ciel gazeux du réservoir 705. Ceci permet alors une montée en température plus rapide des réacteurs 202 en début de journée et donc un chauffage plus efficace desdits réacteurs 202.

- une vanne 710 pour la mise en opération de la boucle caloduc (tirage au vide et/ou remplissage en fluide de travail).

Selon un mode de réalisation particulier, les vannes vapeur 703 et liquide 704 se ferment en début de journée et s'ouvrent en début de nuit de manière autonome grâce à l'action d'un moyen de commande autonome dont le fonctionnement est décrit en référence aux FIGURES 8a et 8b.

Le moyen de commande autonome des vannes 703 et 704 consiste en bulbe thermostatique 801, chauffé le jour et refroidi la nuit par une plaque absorbante 802 présentant à la fois une forte absorptivité solaire, une forte émissivité infrarouge et une faible masse thermique. La plaque absorbante 802 est préférentiellement exposée vers la voute céleste pour exploiter à la fois le chauffage par rayonnement solaire le jour et le refroidissement radiatif la nuit. Le bulbe thermostatique 801 contient un fluide qui est agencé pour, sous l'action du rayonnement solaire, d'augmenter la pression dans un soufflet 803, et de déplacer un pointeau 804 sur le siège de l'orifice de la vanne 703 ou 704, obturant ainsi le passage du fluide de travail. Lorsque la pression diminue dans le bulbe thermostatique 801, par refroidissement radiatif en début de nuit, le soufflet 803 diminue de volume sous l'action d'un ressort 805 dont la raideur peut être réglée par une vis de réglage 806. Le pointeau 804 solidaire du soufflet 803 se décolle du siège de la vanne703 ou 704 et permet alors le passage du fluide de travail de la boucle caloduc.

**Mode de réalisation alternatif du dispositif selon l'invention : une conception modulaire**

Selon une variante particulière de l'invention, compatible avec l'un quelconque des modes de réalisation présentés dans les paragraphes précédents, et afin de faciliter la mise en oeuvre et l'installation du dispositif selon l'invention, il est proposé une conception modulaire du dispositif selon l'invention.

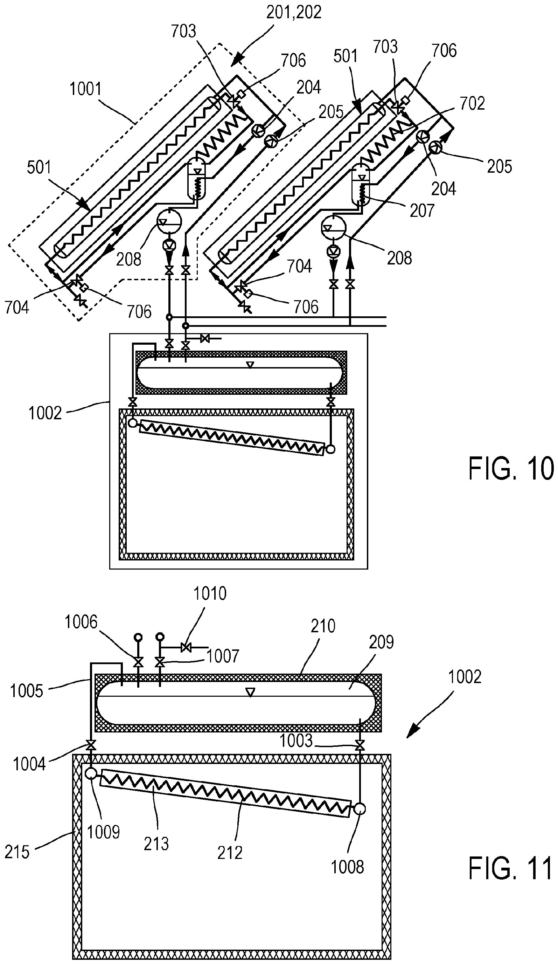

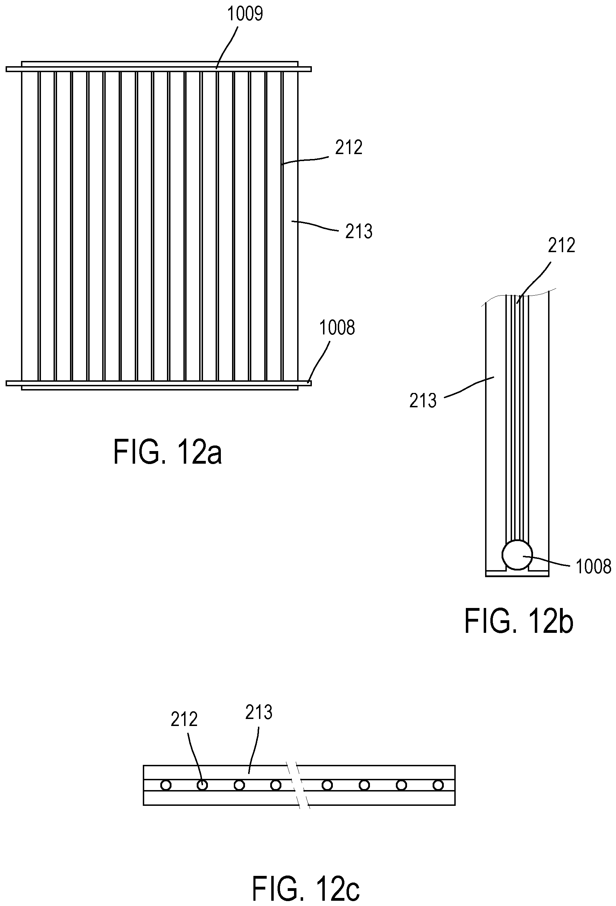

En référence aux FIGURES 10, 11 et 12, un tel dispositif modulaire comprend au moins deux ensembles facilement connectables :

- un premier ensemble 1001 composé de plusieurs modules réacteurs 202, 201 tels que décrits précédemment et comprenant chacun les éléments tubulaires 501 exposés au soleil, le condenseur 207 - préférentiellement de type ammoniac - et le premier réservoir 208 dont le volume correspond à la capacité du module, le dispositif de refroidissement des éléments tubulaires 501 et du condenseur 702, ainsi que les moyens permettant de contrôler les flux de gaz réactif au cours de la journées (clapets 703, 704, 204, 205, dispositifs solaires de commande des volets d'aération et/ou de la boucle caloduc 706),

- un second ensemble 1002 intégrant Les éléments nécessaires à la production de froid :

  - une chambre froide 215 comportant une isolation thermique ;

  - un réservoir 209 de réfrigérant liquide dont le volume correspond préférentiellement aux besoins frigorifiques journaliers de la chambre froide 215. Ce réservoir comporte une isolation thermique 210 pour limiter les apports thermiques lors de la phase nocturne de production de froid, et des connexions liquide 1003 et vapeur 1005 comportant des vannes de connexion 1004 avec l'évaporateur 212 placé dans la chambre froide 215. Des connexions 1006 et 1007 avec les clapets 206 et 205garantissent la connexion avec le premier ensemble 1001 ;

  - un évaporateur 212, préférentiellement de type noyé, et avantageusement alimenté en réfrigérant par thermosiphon depuis le second réservoir de réfrigérant liquide 209placé au-dessus. L'évaporateur 212 est constitué de tubes inclinés verticalement et alimentés en réfrigérant en leur partie inférieure par un collecteur 1008. Les vapeurs produites sont collectés par un second collecteur 1009 placé dans une position plus haute que le collecteur 1008, de telle sorte que les vapeurs produites permettent un entrainement et une circulation naturelle du réfrigérant dans l'évaporateur 212 ;

  - un matériau à changement de phase 213 permettant de stocker le froid produit et de le restituer à la demande au cours de la journée suivante ;

- une connexion munie d'une vanne d'isolement étanche 1010 permettant de réaliser la mise en opération du dispositif complet (tirage au vide et remplissage en gaz réactif)

La modularité d'un tel dispositif permet de connecté une pluralité de premiers éléments 1001 à au moins un second élément 1002.

**Revendications**

1. Dispositif de production autonome de froid à partir d'une source thermique solaire (200) basse température comprise entre 50 °C et 130 °C, ledit froid étant produit avec une différence de température inférieure de 5 à 40 °C par rapport à la température ambiante et ledit dispositif mettant un oeuvre un procédé de sorption thermochimique d'un réfrigérant par un réactif solide, ledit dispositif comprenant :

- un réacteur (202) agencé pour contenir le réactif solide (502) et comprenant au moins un échangeur thermique (201) pour refroidir et/ou chauffer ledit réacteur (202),
- un condenseur (207) apte à liquéfier le réfrigérant gazeux venant du réacteur (202),
- un premier réservoir (208) pour stocker à température ambiante le réfrigérant liquide (217) produit par le condenseur (207),
- une enceinte (215) agencée pour stocker un matériau à changement de phase (213) et comprenant par ailleurs un évaporateur (212) en contact direct avec ledit matériau à changement de phase (213) et apte à évaporer le réfrigérant liquide (217),

- au moins un moyen de conduction du réfrigérant (203, 211, 214, 216, 504), et
- au moins un moyen de contrôle du débit du réfrigérant (204-206) opérant sur les moyens de conduction (203, 211, 214, 216, 504), **caractérisé en ce que** ledit dispositif comprenant de plus:

- un second réservoir (209) pour stocker le réfrigérant liquide (217) à une température inférieure à la température ambiante, relié d'une part au premier réservoir (208) et d'autre part à l'évaporateur (212) et au réacteur (202),
- ledit au moins un moyen de conduction du réfrigérant (203, 211, 214, 216, 504) étant agencé pour faire circuler ledit réfrigérant sous forme liquide ou gazeuse entre le réacteur (202), le premier réservoir (208), le second réservoir (209) et l'évaporateur (212),
- ledit au moins un moyen de contrôle (204-206) étant agencé pour réguler le débit du réfrigérant de manière autonome en fonction des pressions régnant dans le réacteur (202), les premier et second réservoirs (208, 209), le condenseur (207) et l'évaporateur (212).

2. Dispositif (200) selon la revendication précédente, **caractérisée en ce que** l'enceinte (215) et/ou le second réservoir (209) sont isolés thermiquement.

3. Dispositif (200) selon l'une quelconque des revendications 1 ou 2, **caractérisé en ce que** l'évaporateur (212) est alimenté en réfrigérant liquide (217) depuis le second réservoir (209) par différence de densité dudit réfrigérant entre l'entrée (218) et la sortie (219) dudit évaporateur (212).

4. Dispositif (200) selon l'une quelconque des revendications 1 à 3, **caractérisé en ce que** le réacteur (202) comprend par ailleurs un caisson isotherme (503) agencé pour contenir l'échangeur thermique (201) et/ou le réacteur (202) et apte à réduire les pertes thermiques dudit réacteur (202).

5. Dispositif (200) selon l'une quelconque des revendications 1 à 4, **caractérisé en ce que** le réacteur (202) est constitué d'une pluralité d'éléments tubulaires (501) comprenant le réactif solide (502) et reliés entre eux par lesdits moyens de conduction du réfrigérant(203, 211, 214, 216, 504).

6. Dispositif (200) selon la revendication 5, **caractérisé en ce que** la pluralité d'éléments tubulaires (501) est revêtue d'un revêtement absorbant solaire (505) pour améliorer le rendement thermique de la pluralité d'éléments tubulaires (501), ledit revêtement étant en contact intime avec la paroi de la pluralité d'éléments tubulaires (501).

**7.** Dispositif (200) selon la revendication précédente, **caractérisé en ce que** le revêtement absorbant solaire (505) présente une faible émissivité infrarouge.

**8.** Dispositif (200) selon l'une quelconque des revendications 5 à 7, **caractérisé en ce que** le réacteur (202) comprend par ailleurs au moins un élément couvrant (506) transparent au rayonnement solaire agencé pour réduire les pertes thermiques et maximiser le rendement de captation solaire, ledit au moins un élément couvrant (506) s'étendant au-delà de la face du réacteur (202) exposée au soleil.

**9.** Dispositif (200) selon l'une quelconque des revendications 5 à 8, **caractérisé en ce qu'**au moins une des faces non exposées au soleil du réacteur (202)est isolée thermiquement pour réduire les pertes thermiques.

**10.** Dispositif (200) selon l'une quelconque des revendications 5 à 9, **caractérisée en ce que** le réacteur (202) comprend en outre des moyens de motorisation afin d'orienter la pluralité d'éléments tubulaires (501) du réacteur (202) selon un plan sensiblement perpendiculaire à la direction du soleil et de présenter ainsi une surface d'absorption solaire maximale.

**11.** Dispositif (200) selon l'une quelconque des revendications 8 à 10, **caractérisé en ce que** le refroidissement nocturne du réacteur (202) est assuré par circulation naturelle de l'air dans le réacteur (202).

**12.** Dispositif (200) selon la revendication précédente, **caractérisé en ce que** le réacteur (202) comprend par ailleurs au moins un volet d'aération (508, 509) de la pluralité d'éléments tubulaires (501), ledit au moins un volet (508, 509) étant situé en partie haute et/ou en partie basse dudit réacteur (202).

**13.** Dispositif (200) selon la revendication précédente, **caractérisé en ce que** l'au moins un volet d'aération (508, 509) est agencé pour assurer l'étanchéité du réacteur (202) lorsqu'il est en position fermée.

**14.** Dispositif (200) selon l'une quelconque des revendications 12 ou 13, **caractérisé en ce que** l'au moins un volet d'aération (508, 509) comprend par ailleurs un moyen d'entrainement pour assurer son ouverture et/ou sa fermeture.

**15.** Dispositif (200) selon la revendication précédente, **caractérisé en ce que** le moyen d'entrainement consiste en un moteur électrique de faible puissance.

**16.** Dispositif (200) selon la revendication précédente, **caractérisé en ce que** le moteur électrique est alimenté par un dispositif de production et/ou de stockage d'énergie électrique.

**17.** Dispositif (200) selon la revendication 14, **caractérisé en ce que** le moyen d'entrainement consiste en un dispositif de pignons (602) et crémaillère (601) actionné par un vérin rotatif à air comprimé relié à une réserve d'air comprimée.

**18.** Dispositif (200) selon la revendication précédente, **caractérisé en ce que** la réserve d'air comprimé est rechargée par un compresseur d'air alimenté par des panneaux photovoltaïques.

**19.** Dispositif (200) selon la revendication 14, **caractérisé en ce que** le moyen d'entrainement consiste en un dispositif de pignons (602) et crémaillère (601) actionné par un vérin linéaire hydraulique (605) simple effet commandé par un bulbe thermostatique (611) en contact thermique avec une plaque absorbante (612) exposée au soleil.

**20.** Dispositif (200) selon l'une quelconque des revendications 11à 19, **caractérisé en ce que** la pluralité d'éléments tubulaires (501) comprend par ailleurs une pluralité d'ailettes (510) circulaires dont la base est en contact thermique intime avec la paroi des éléments tubulaires (501) afin de favoriser les échanges thermiques.

**21.** Dispositif (200) selon la revendication précédente, **caractérisé en ce que** la pluralité d'ailettes (510) est recouverte d'un revêtement absorbant solaire pour favoriser les échanges thermiques.

**22.** Dispositif (200) selon l'une quelconque des revendications 11 à 21, **caractérisé en ce que** la pluralité d'éléments tubulaires (501) sont disposés horizontalement afin d'améliorer l'écoulement de l'air autour desdits éléments tubulaires (501).

**23.** Dispositif (200) selon l'une quelconque des revendications 11 à 22, **caractérisé en ce que** le condenseur (207) est de type échangeur à tubes à ailettes et refroidit, de jour, par convection naturelle de l'air autour desdits tubes à ailettes (510).

24. Dispositif (200) selon l'une quelconque des revendications 5 à 10, **caractérisé en ce que** le refroidissement nocturne du réacteur (202) est assuré par une boucle caloduc fonctionnant en thermosiphon et comprenant :

- un fluide de travail apte à réaliser un travail thermodynamique, ledit fluide de travail se propageant dans la boucle caloduc par le biais d'au moins un moyen de conduction (707, 708),
- un évaporateur (701), dit de boucle caloduc, coopérant avec la pluralité d'éléments tubulaires (501) du réacteur (202) et agencé pour évaporer le fluide de travail et absorber la chaleur dégagée par le réacteur (202),
- un condenseur (702), dit de boucle caloduc, coopérant avec l'évaporateur (212) et le réacteur (202), ledit condenseur (702) étant agencé pour liquéfier le fluide de travail et réaliser un transfert thermique avec l'air extérieur,
- un réservoir de fluide de travail (705) agencé pour stocker ledit fluide de travail liquide et permettre le remplissage optimal de l'au moins un élément tubulaire (501) du réacteur (202) en fluide de travail,
- un dispositif passif et autonome de contrôle du débit du fluide de travail dans la boucle caloduc comprenant :

- un premier moyen de contrôle du débit du fluide de travail (703), situé entre le réservoir de fluide de travail (705) et la partie basse de l'au moins un moyen de conduction du fluide de travail (707, 708), ledit premier moyen de contrôle étant agencé pour contrôler l'alimentation en fluide de travail liquide de l'au moins un moyen de conduction du fluide de travail (707, 708),
- un second moyen de contrôle du débit du fluide de travail (704), situé entre la sortie de l'évaporateur (701) de boucle caloduc et le condenseur (702) de boucle caloduc, agencé pour contrôler le passage du fluide de travail gazeux dans l'au moins un moyen de conduction du fluide de travail.

25. Dispositif (200) selon la revendication précédente, **caractérisé en ce qu'**il comprend par ailleurs une vanne de mise en opération de la boucle caloduc (710), agencée pour remplir ladite boucle caloduc en fluide de travail et/ou la purger.

26. Dispositif, selon l'une quelconque des revendications 24 ou 25, **caractérisé en ce que** l'évaporateur (701) de boucle caloduc comprend au moins un moyen de conduction du fluide de travail disposé à l'intérieur de la pluralité d'éléments tubulaires (501) du réacteur (202) et en contact thermique intime avec le réactif solide (502), lesdits au moins un moyens de conduction du fluide de travail associés à chaque élément tubulaire (501) étant reliés entre eux par des collecteurs en parties haute et basse.

27. Dispositif (200) selon l'une quelconque des revendications 24 à 26, **caractérisé en ce que** le condenseur (702) de boucle caloduc, est composé d'au moins un tube à ailettes (510) et reliés entre eux par des moyens de conduction du fluide de travail (707, 708).

28. Dispositif (200) selon la revendication précédente, **caractérisé en ce que** les au moins un tubes à ailettes du condenseur (702) de boucle caloduc sont disposés de manière sensiblement horizontale à l'arrière du réacteur (202), avec une légère inclinaison pour permettre l'écoulement par gravité du fluide de travail liquéfié vers le réservoir de fluide de travail (705).

29. Dispositif (200) selon l'une quelconque des revendications 24à 28, **caractérisé en ce que** le réservoir de fluide de travail (705) est agencé pour maintenir un niveau minimal de fluide de travail dans les moyens de conduction dudit fluide de travail (707, 708) compris entre le tiers et les trois-quarts de la hauteur de d'un élément tubulaire (501) du réacteur (202).

30. Dispositif (200) selon l'une quelconque des revendications 24 à 29, **caractérisé en ce que** le réservoir de fluide de travail (705) est agencé pour évaporer le fluide de travail et comprend par ailleurs le condenseur (207) de réfrigérant agencé pour liquéfier ledit réfrigérant.

31. Dispositif (200) selon l'une quelconque des revendications 24 à 30, **caractérisé en ce que** le dispositif de contrôle du débit du fluide de travail dans la boucle caloduc comprend par ailleurs au moins un moyen de commande autonome (706), agencé pour respectivement ouvrir et fermer les premier (703) et second (704) moyens de contrôle du débit du fluide de travail.

32. Dispositif (200) selon la revendication précédente, **caractérisé en ce que** l'au moins un moyen de commande autonome des premier (703) et second (704) moyens de contrôle du débit du fluide de travail comprend :

- une plaque absorbante (802) apte à absorber le rayonnement solaire et à émettre dans l'infrarouge, ladite plaque absorbante (802) étant agencée pour chauffer grâce au rayonnement solaire diurne et refroidir durant la nuit,
- un bulbe thermostatique (801) en contact thermique avec la plaque absorbante (802), comprenant un fluide apte à se dilater sous l'effet d'une variation de température,
- un élément de liaison(804) coopérant d'une part avec le bulbe thermostatique (801) et d'autre part avec le premier (703) et/ou le second (704) moyen de contrôle du débit du fluide de travail, ledit élément de liaison(804) étant agencé pour ouvrir ou fermer ledit moyen de contrôle du débit du fluide de travail (703, 704).

33. Dispositif (200) selon l'une quelconque des revendications 5 à 32, **caractérisé en ce qu'**il consiste en une architecture modulaire composée :

- d'une pluralité de premiers ensembles (1001) comprenant chacun :

- le réacteur (202) constitué d'une pluralité d'éléments tubulaires (501) et comprenant l'échangeur thermique (201),
- le condenseur (207) apte à liquéfier le réfrigérant,
- le réservoir (208) pour stocker le réfrigérant à température ambiante et dont le volume correspond au volume de la pluralité d'éléments tubulaire d'un premier ensemble (1001),
- des moyens de contrôle du débit du réfrigérant (204, 205),

- d'un second ensemble (1002) comprenant :

- l'enceinte (215) agencée pour stocker un matériau à changement de phase (213) et comportant une isolation thermique,
- le second réservoir (209) pour stocker le réfrigérant liquide (217) à une température inférieure à la température ambiante et comportant une isolation thermique,
- l'évaporateur (212) pour évaporer le réfrigérant, situé dans l'enceinte (215) et coopérant avec le second réservoir (209),
- des premiers moyens de contrôle du débit du réfrigérant (1003, 1004) entre l'évaporateur (212) et le second réservoir (209),
- des seconds moyens de contrôle du débit du réfrigérant pour assurer la connexion entre le second ensemble (1002) et la pluralité de premiers ensembles (1001).

34. Dispositif (200) selon la revendication précédente, **caractérisé en ce que** l'évaporateur (212) est de type noyé et comprend au moins un élément tubulaire agencé pour faire circuler le réfrigérant par thermosiphon avec le second réservoir (209).

35. Dispositif (200) selon l'une quelconque des revendications 33 ou 34, **caractérisé en ce que** le second ensemble (1002) comprend une vanne d'isolement étanche (1010), agencée pour remplir le dispositif (200) en fluide réfrigérant et/ou pour le purger.

36. Dispositif (200) selon l'une quelconque des revendications précédentes, **caractérisée en ce que** le réfrigérant est de l'ammoniac.

37. Utilisation du dispositif selon l'une quelconque des revendications pour produire du froid.

38. Utilisation du dispositif selon l'une quelconque des revendications 1 à 36 pour produire de l'eau, **caractérisé en ce que** la production d'eau est réalisée par condensation de la vapeur d'eau contenue dans l'air sur une paroi maintenue froide par le dispositif selon l'une quelconque des revendications 1 à 36.

**Patentansprüche**

1. Vorrichtung zum autonomen Erzeugen von Kälte ausgehend von einer niedriger Temperatur solarthermischen Quelle (200) zwischen 50 °C und 130 °C, wobei die Kälte mit einem Temperaturunterschied erzeugt wird, der um 5 bis 40 °C unter der Umgebungstemperatur liegt, und wobei die Vorrichtung ein Verfahren thermochemischer Sorption eines Kältemittels mit einem festen Reagens durchführt, wobei die Vorrichtung enthält:

- einen Reaktor (202), der dazu ausgebildet ist, das Feststoff-Reagens (502) zu enthalten und zumindest einen Wärmetauscher (201) zum Abkühlen und/oder Erwärmen des Reaktors (202) aufweist,
- einen Kondensator (207), der dazu geeignet ist, das aus dem Reaktor (202) kommende gasförmige Kältemittel zu verflüssigen,
- einen ersten Vorratsbehälter (208) zum Speichern des von dem Kondensator (207) erzeugten flüssigen Kältemittels (217) bei Umgebungstemperatur,
- einen Einschliessung (215), der dazu angeordnet ist, ein Phasenwechselmaterial (213) zu speichern, und ferner einen Verdampfer (212) aufweist, der in direktem Kontakt mit dem Phasenwechselmaterial (213) steht und dazu ausgebildet ist, das flüssige Kältemittel (217) zu verdampfen,
- zumindest eine Kältemittelleitungseinrichtung (203, 211, 214, 216, 504), und
- zumindest eine Kältemitteldurchsatzsteuereinrichtung (204 - 206), die auf die Leitungseinrichtung (203, 211, 214, 216, 504) einwirkt,

**dadurch gekennzeichnet, dass** die Vorrichtung ferner enthält:

- einen zweiten Vorratsbehälter (209) zum Speichern des flüssigen Kältemittels (217) bei einer Temperatur unterhalb der Umgebungstemperatur, der einerseits mit dem ersten Vorratsbehälter (208) und andererseits mit dem Verdampfer (212) und dem Reaktor (202) verbunden ist,
- wobei die zumindest eine Kältemittelleitungseinrichtung (203, 211, 214, 216, 504) dazu angeordnet ist, das Kältemittel in flüssiger oder gasförmiger Form zwischen dem Reaktor (202), dem ersten Vorratsbehälter (208), dem zweiten Vorratsbehälter (209) und dem Verdampfer (212) strömen zu lassen,
- wobei die zumindest eine Steuereinrichtung (204 - 206) dazu angeordnet ist, den Durchsatz des Kältemittels autonom in Abhängigkeit von den Druckwerten zu regeln, die in dem Reaktor (202), dem ersten und dem zweiten Vorratsbehälter (208, 209), dem Kondensator (207) und dem Verdampfer (212) herrschen.

2. Vorrichtung (200) nach dem vorangehenden Anspruch, **dadurch gekennzeichnet, dass** der Einschliessung (215) und/oder der zweite Vorratsbehälter (209) wärmeisoliert sind.

3. Vorrichtung (200) nach einem der Ansprüche 1 oder 2, **dadurch gekennzeichnet, dass** der Verdampfer (212) mit flüssigem Kältemittel (217) aus dem zweiten Vorratsbehälter (209) durch einen Dichteunterschied des Kältemittels zwischen Einlass (218) und Auslass (219) des Verdampfers (212) versorgt wird.

4. Vorrichtung (200) nach einem der Ansprüche 1 bis 3, **dadurch gekennzeichnet, dass** der Reaktor (202) ferner einen isothermen Kasten (503) aufweist, der dazu angeordnet ist, den Wärmetauscher (201) und/oder den Reaktor (202) zu enthalten und dazu ausgebildet ist, Wärmeverluste des Reaktors (202) zu vermindern.

5. Vorrichtung (200) nach einem der Ansprüche 1 bis 4, **dadurch gekennzeichnet, dass** der Reaktor (202) aus einer Mehrzahl von rohrförmigen Elementen (501) besteht, die das Feststoff-Reagens (502) enthalten und über die Kältemittelleitungseinrichtung (203, 211, 214, 216, 504) miteinander verbunden sind.

6. Vorrichtung (200) nach Anspruch 5, **dadurch gekennzeichnet, dass** die Mehrzahl von rohrförmigen Elementen (501) mit einer solarabsorbierenden Beschichtung (505) beschichtet ist, um den thermischen Wirkungsgrad der Mehrzahl von rohrförmigen Elementen (501) zu verbessern, wobei die Beschichtung in engem Kontakt mit der Wand der Mehrzahl von rohrförmigen Elementen (501) ist.

7. Vorrichtung (200) nach dem vorangehenden Anspruch, **dadurch gekennzeichnet, dass** die solarabsorbierende Beschichtung (505) einen geringen Infrarot-Emissionsgrad aufweist.

8. Vorrichtung (200) nach einem der Ansprüche 5 bis 7, **dadurch gekennzeichnet, dass** der Reaktor (202) ferner zumindest ein für Sonnenstrahlung durchlässiges Deckelement (506) enthält, das dazu angeordnet ist, die Wärmeverluste zu vermindern und den Sonneneinstrahlwirkungsgrad zu maximieren, wobei das zumindest eine Deckelement (506) sich über die der Sonne ausgesetzte Seite des Reaktors (202) hinaus erstreckt.

9. Vorrichtung (200) nach einem der Ansprüche 5 bis 8, **dadurch gekennzeichnet, dass** zumindest eine der nicht der Sonne ausgesetzten Seiten des Reaktors (202) wärmeisoliert ist, um Wärmeverluste zu vermindern.

10. Vorrichtung (200) nach einem der Ansprüche 5 bis 9, **dadurch gekennzeichnet, dass** der Reaktor (202) ferner Antriebseinrichtungen enthält, um die Mehrzahl von rohrförmigen Elementen (501) des Reaktors (202) in einer im Wesentlichen senkrecht zur Richtung der Sonne verlaufenden Ebene auszurichten und somit eine maximale Sonnenabsorptionsfläche zu haben.

11. Vorrichtung (200) nach einem der Ansprüche 8 bis 10, **dadurch gekennzeichnet, dass** die nächtliche Abkühlung des Reaktors (202) durch die natürliche Luftzirkulation in dem Reaktor (202) durchgeführt wird.

12. Vorrichtung (200) nach dem vorangehenden Anspruch, **dadurch gekennzeichnet, dass** der Reaktor (202) ferner zumindest eine Lüftungsklappe (508, 509) für die Lüftung der Mehrzahl von rohrförmigen Elementen (501) aufweist, wobei die zumindest eine Klappe (508, 509) sich im oberen Teil und/oder im unteren Teil des Reaktors (202) befindet.

13. Vorrichtung (200) nach dem vorangehenden Anspruch, **dadurch gekennzeichnet, dass** die zumindest eine Lüftungsklappe (508, 509) dazu ausgebildet ist, die Dichtheit des Reaktors (202) sicherzustellen, wenn er in geschlossener Position ist.

14. Vorrichtung (200) nach einem der Ansprüche 12 oder 13, **dadurch gekennzeichnet, dass** die zumindest eine Lüftungsklappe (508, 509) ferner eine Antriebseinrichtung enthält, um deren Öffnen und/oder Schließen sicherzustellen.

15. Vorrichtung (200) nach dem vorangehenden Anspruch, **dadurch gekennzeichnet, dass** die Antriebseinrichtung aus einem Elektromotor mit geringer Leistung besteht.

16. Vorrichtung (200) nach dem vorangehenden Anspruch, **dadurch gekennzeichnet, dass** der Elektromotor über eine Vorrichtung zum Erzeugen und/oder Speichern von elektrischer Energie gespeist wird.

17. Vorrichtung (200) nach Anspruch 14, **dadurch gekennzeichnet, dass** die Antriebseinrichtung aus einer Vorrichtung mit Zahnrädern (602) und Zahnstange (601) besteht, die über einen drehbaren Druckluftzylinder betätigt wird, der mit einem Druckluftvorrat verbunden ist.

18. Vorrichtung (200) nach dem vorangehenden Anspruch, **dadurch gekennzeichnet, dass** der Druckluftvorrat über einen Druckluftkompressor nachgeladen wird, der über Photovoltaik-Paneele gespeist wird.

19. Vorrichtung (200) nach Anspruch 14, **dadurch gekennzeichnet, dass** die Antriebseinrichtung aus einer Vorrichtung mit Zahnrädern (602) und Zahnstange (601) besteht, die über einen einfach wirkenden, linearen Hydraulikzylinder (605) betätigt wird, der über einen thermostatischen Fühler (611) in Wärmekontakt mit einer der Sonne ausgesetzten absorbierenden Platte (612) gesteuert ist.

20. Vorrichtung (200) nach einem der Ansprüche 11 bis 19, **dadurch gekennzeichnet, dass** die Mehrzahl von rohrförmigen Elementen (501) ferner eine Mehrzahl von kreisförmigen Lamellen (510) enthält, deren Basis in engem Wärmekontakt mit der Wand der rohrförmigen Elemente (501) steht, um den Wärmeaustausch zu begünstigen.

21. Vorrichtung (200) nach dem vorangehenden Anspruch, **dadurch gekennzeichnet, dass** die Mehrzahl von Lamellen (510) mit einer solarabsorbierenden Beschichtung beschichtet ist, um den Wärmeaustausch zu begünstigen.

22. Vorrichtung (200) nach einem der Ansprüche 11 bis 21, **dadurch gekennzeichnet, dass** die Mehrzahl von rohrförmigen Elementen (501) horizontal angeordnet ist, um die Luftströmung um die rohrförmigen Elemente (501) herum zu verbessern.

23. Vorrichtung (200) nach einem der Ansprüche 11 bis 22, **dadurch gekennzeichnet, dass** der Kondensator (207) vom Typ Lamellenröhren-Wärmetauscher ist und bei Tag durch natürliche Luftkonvektion um die Lamellenröhren (510) herum abkühlt.

24. Vorrichtung (200) nach einem der Ansprüche 5 bis 10, **dadurch gekennzeichnet, dass** die nächtliche Abkühlung des Reaktors (202) über eine Wärmerohrschleife sichergestellt wird, die als Thermosiphon betrieben wird und enthält:

   - ein Arbeitsfluid, das dazu ausgebildet ist, eine thermodynamische Arbeit zu leisten, wobei das Arbeitsfluid sich in der Wärmerohrschleife über zumindest eine Leitungseinrichtung (707, 708) ausbreitet,

- einen Verdampfer (701), Wärmerohrschleifenverdampfer genannt, der mit der Mehrzahl von rohrförmigen Elementen (501) des Reaktors (202) zusammenwirkt und dazu ausgebildet ist, das Arbeitsfluid zu verdampfen und die von dem Reaktor (202) abgegebene Wärme aufzunehmen,

- einen Kondensator (702), Wärmerohrschleifenkondensator genannt, der mit dem Verdampfer (212) und dem Reaktor (202) zusammenwirkt, wobei der Kondensator (702) dazu ausgebildet ist, das Arbeitsfluid zu verflüssigen und einen Wärmeübergang mit der Außenluft durchzuführen,

- einen Arbeitsfluidvorratsbehälter (705), der dazu angeordnet ist, das flüssige Arbeitsfluid zu speichern und das optimale Befüllen des zumindest einen rohrförmigen Elements (501) des Reaktors (202) mit Arbeitsfluid zu gestatten,

- eine passive und autonome Vorrichtung zum Steuern des Durchsatzes des Arbeitsfluids in der Wärmerohrschleife, die enthält:

- eine erste Arbeitsfluiddurchsatzsteuereinrichtung (703), die sich zwischen dem Arbeitsfluidvorratsbehälter (705) und dem unteren Teil der zumindest einen Arbeitsfluidleitungseinrichtung (707, 708) befindet, wobei die erste Steuereinrichtung dazu angeordnet ist, die Versorgung der zumindest einen Arbeitsfluidleitungseinrichtung (707, 708) mit flüssigem Arbeitsfluid zu steuern,

- eine zweite Arbeitsfluiddurchsatzsteuereinrichtung (704), die sich zwischen dem Auslass des Verdampfers (701) der Wärmerohrschleife und dem Kondensator (702) der Wärmerohrschleife befindet und dazu angeordnet ist, den Übergang des gasförmigen Arbeitsfluids in die zumindest eine Arbeitsfluidleitungseinrichtung zu steuern.

25. Vorrichtung (200) nach dem vorangehenden Anspruch, **dadurch gekennzeichnet, dass** sie ferner ein Ventil zum Einschalten der Wärmerohrschleife (710) enthält, das dazu angeordnet ist, die Wärmerohrschleife mit Arbeitsfluid zu füllen und/oder sie zu leeren.

26. Vorrichtung nach einem der Ansprüche 24 oder 25, **dadurch gekennzeichnet, dass** der Verdampfer (701) der Wärmerohrschleife zumindest eine Arbeitsfluidleitungseinrichtung enthält, die innerhalb der Mehrzahl von rohrförmigen Elementen (501) des Reaktors (202) angeordnet ist und in engem Wärmekontakt mit dem Feststoff-Reagens (502) steht, wobei die Arbeitsfluidleitungseinrichtungen, die jedem rohrförmigen Element (501) zugeordnet sind, über Kollektoren im oberen und im unteren Teil miteinander verbunden sind.

27. Vorrichtung (200) nach einem der Ansprüche 24 bis 26, **dadurch gekennzeichnet, dass** der Kondensator (702) der Wärmerohrschleife aus zumindest einer Lamellenröhre (510) zusammengesetzt ist, die über Arbeitsfluidleitungseinrichtungen (707, 708) miteinander verbunden sind.

28. Vorrichtung (200) nach dem vorangehenden Anspruch, **dadurch gekennzeichnet, dass** die Lamellenröhren des Kondensators (702) der Wärmerohrschleife im Wesentlichen horizontal hinter dem Reaktor (202) angeordnet sind, und zwar mit geringfügiger Neigung, um das schwerkraftbedingte Strömen des verflüssigten Arbeitsfluids zum Arbeitsfluidvorratsbehälter (705) zu gestatten.

29. Vorrichtung (200) nach einem der Ansprüche 24 bis 28, **dadurch gekennzeichnet, dass** der Arbeitsfluidvorratsbehälter (705) dazu angeordnet ist, einen minimalen Arbeitsfluidpegel in der Arbeitsfluidleitungseinrichtung (707, 708) aufrechtzuerhalten, der zwischen einem Drittel und Dreiviertel der Höhe eines rohrförmigen Elements (501) des Reaktors (202) liegt.

30. Vorrichtung (200) nach einem der Ansprüche 24 bis 29, **dadurch gekennzeichnet, dass** der Arbeitsfluidvorratsbehälter (705) dazu angeordnet ist, das Arbeitsfluid zu verdampfen, und ferner den Kältemittelkondensator (207) enthält, der dazu angeordnet ist, das Kältemittel zu verflüssigen.

31. Vorrichtung (200) nach einem der Ansprüche 24 bis 30, **dadurch gekennzeichnet, dass** die Arbeitsfluiddurchsatzsteuervorrichtung in der Wärmerohrschleife ferner zumindest eine autonome Steuereinrichtung (706) enthält, die dazu angeordnet ist, die erste (703) und die zweite (704) Arbeitsfluiddurchsatzsteuereinrichtung zu öffnen bzw. zu schließen.

32. Vorrichtung (200) nach dem vorangehenden Anspruch, **dadurch gekennzeichnet, dass** die zumindest eine autonome Steuereinrichtung der ersten (703) und der zweiten (704) Arbeitsfluiddurchsatzsteuereinrichtung enthält:

- eine absorbierende Platte (802), die dazu geeignet ist, die Sonnenstrahlung zu absorbieren und im Infrarotbereich zu emittieren, wobei die absorbierende Platte (802) dazu angeordnet ist, sich aufgrund der Sonneneinstrahlung bei Tag zu erwärmen und während der Nacht abzukühlen,
- einen thermostatischen Fühler (801), der in Wärmekontakt mit der absorbierenden Platte (802) steht und der ein Fluid enthält, das dazu geeignet ist, sich unter der Wirkung einer Temperaturschwankung auszudehnen,
- ein Verbindungselement (804), das einerseits mit dem thermostatischen Fühler (801) und andererseits mit der ersten (703) und/oder der zweiten (704) Arbeitsfluiddurchsatzsteuereinrichtung zusammenwirkt, wobei das Verbindungselement (804) dazu angeordnet ist, die Arbeitsfluiddurchsatzsteuereinrichtung (703, 704) zu öffnen bzw. zu schließen.

33. Vorrichtung (200) nach einem der Ansprüche 5 bis 32, **dadurch gekennzeichnet, dass** sie aus einer modularen Architektur besteht, die zusammengesetzt ist aus:

- einer Mehrzahl von ersten Einheiten (1001), die jeweils enthalten:

    - den Reaktor (202), der aus einer Mehrzahl von rohrförmigen Elementen (501) besteht und den Wärmetauscher (201) enthält,
    - den Kondensator (207), der dazu geeignet ist, das Kältemittel zu verflüssigen,
    - den Vorratsbehälter (208) zum Speichern des Kältemittels bei Umgebungstemperatur, der im Volumen dem Volumen der Mehrzahl von rohrförmigen Elementen einer ersten Einheit (1001) entspricht,
    - Kältemitteldurchsatzsteuereinrichtungen (204, 205),

- einer zweiten Einheit (1002), enthaltend:

    - den Einschliessung (215), der dazu angeordnet ist, ein Phasenwechselmaterial (213) zu speichern, und eine Wärmeisolierung aufweist,
    - den zweiten Vorratsbehälter (209) zum Speichern des flüssigen Kältemittels (217) bei einer Temperatur unterhalb der Umgebungstemperatur, der eine Wärmeisolierung aufweist,
    - den Verdampfer (212) zum Verdampfen des Kältemittels, der sich in dem Einschliessung (215) befindet und mit dem zweiten Vorratsbehälter (209) zusammenwirkt,
    - erste Kältemitteldurchsatzsteuereinrichtungen (1003, 1004) zwischen dem Verdampfer (212) und dem zweiten Vorratsbehälter (209),
    - zweite Kältemitteldurchsatzsteuereinrichtungen zum Sicherstellen der Verbindung zwischen der zweiten Einheit (1002) und der Mehrzahl von ersten Einheiten (1002).

34. Vorrichtung (200) nach dem vorangehenden Anspruch, **dadurch gekennzeichnet, dass** der Verdampfer (212) überflutet ausgeführt ist und zumindest ein rohrförmiges Element enthält, das dazu angeordnet ist, das Kältemittel dadurch strömen zu lassen, dass es mit dem zweiten Vorratsbehälter (209) als Thermosiphon wirkt.

35. Vorrichtung (200) nach einem der Ansprüche 33 oder 34, **dadurch gekennzeichnet, dass** die zweite Einheit (1002) ein dichtes Absperrventil (1010) enthält, das dazu angeordnet ist, die Vorrichtung (200) mit Kältemittelfluid zu füllen und/oder sie zu leeren.

36. Vorrichtung (200) nach einem der vorangehenden Ansprüche, **dadurch gekennzeichnet, dass** das Kältemittel Ammoniak ist.

37. Verwendung der Vorrichtung nach einem der vorangehenden Ansprüche zum Erzeugen von Kälte.

38. Verwendung der Vorrichtung nach einem der Ansprüche 1 bis 36 zum Erzeugen von Wasser, **dadurch gekennzeichnet, dass** das Erzeugen von Wasser durch Kondensation von in der Luft enthaltenem Wasserdampf an einer Wand erfolgt, die durch die Vorrichtung nach einem der Ansprüche 1 bis 36 kalt gehaltenen wird.

**Claims**

1. Device for the autonomous production of cold from a solar low-temperature thermal source (200) between 50 °C and 130 °C, said cold being produced with a temperature difference of 5 °C to 40 °C below the ambient temperature and said device implementing a method for the thermochemical sorption of a coolant by a solid reagent, said device comprising:

- a reactor (202) arranged to contain the solid reagent (502) and comprising at least one heat exchanger (201) to cool and/or heat said reactor (202),
- a condenser (207) capable of liquefying the gaseous coolant coming from the reactor (202);
- a first tank (208) for storing at ambient temperature the liquid coolant (217) produced by the condenser (207),
- an enclosure (215) arranged to store a phase-change material (213) and also comprising an evaporator (212) in direct contact with said phase-change material (213) and capable of evaporating the liquid coolant (217),
- at least one conduction means for the coolant (203, 211, 214, 216, 504) and
- at least one means of controlling the flow of the coolant (204-206) that acts on the conduction means (203, 211, 214, 216, 504), **characterised in that** said device further comprises:
- a second tank (209) for storing the liquid coolant (217) at a temperature below the ambient temperature, connected to the first tank (208) on the one hand and to the evaporator (212) and the reactor (202) on the other hand,
- said at least one conduction means (203, 211, 214, 216, 504) for the coolant being arranged to circulate said coolant in liquid or gaseous form between the reactor (202), the first tank (208), the second tank (209) and the evaporator (212),
- said at least one control means (204-206) being arranged to regulate the flow of the coolant independently according to the pressures prevailing in the reactor (202), the first and second tanks (208, 209), the condenser (207) and the evaporator (212).

2. Device (200) according to the preceding claim **characterised in that** the enclosure (215) and/or the second tank (209) are thermally insulated.

3. Device (200) according to one of claims 1 or 2 **characterised in that** the evaporator (212) is supplied with liquid coolant (217) from the second tank (209) due to the difference in the density of said coolant between the inlet (218) and outlet (219) of said evaporator (212).

4. Device (200) according to one of claims 1 to 3 **characterised in that** the reactor (202) further comprises an isothermal housing (503) arranged to contain the heat exchanger (201) and/or the reactor (202) and capable of reducing the heat losses of said reactor (202).

5. Device (200) according to one of claims 1 to 4 **characterised in that** the reactor (202) is made up of a plurality of tubular elements (501) comprising the solid reagent (502) and connected to each other by said conduction means (203, 211, 214, 216, 504) for the coolant.

6. Device (200) according to claim 5 **characterised in that** the plurality of tubular elements (501) are coated with a solar-absorbing coating (505) to improve the thermal efficiency of the plurality of tubular elements (501), said coating being in intimate contact with the wall of the plurality of tubular elements (501).

7. Device (200) according to the preceding claim **characterised in that** the solar-absorbing coating (505) has low infrared emissivity.

8. Device (200) according to one of claims 5 to 7 **characterised in that** the reactor (202) further comprises at least one covering element (506), transparent to solar radiation, arranged to reduce the heat losses and to maximise the solar collection efficiency, said at least one covering element (506) extending beyond the reactor (202) face exposed to the sun.

9. Device (200) according to one of claims 5 to 8 **characterised in that** at least one of the reactor (202) faces, that is not exposed to the sun, is thermally insulated in order to reduce the heat losses.

10. Device (200) according to one of claims 5 to 9 **characterised in that** the reactor (202) further comprises motorisation means in order to orient the plurality of tubular elements (501) of the reactor (202) according to a plane substantially perpendicular to the direction of the sun, thereby maximising the solar-absorbing surface.

11. Device (200) according to one of claims 8 to 10 **characterised in that** the night-time cooling of the reactor (202) is provided by natural circulation of the air in the reactor (202).

12. Device (200) according to the preceding claim **characterised in that** the reactor (202) also comprises at least one ventilation flap (508, 509) for the plurality of tubular elements (501), said at least one flap (508, 509) being located at the top and/or bottom part of said reactor (202).

13. Device (200) according to the preceding claim **characterised in that** the at least one ventilation flap (508, 509) is arranged to seal the reactor (202) when it is in the closed position.

14. Device (200) according to one of claims 12 or 13 **characterised in that** the at least one ventilation flap (508, 509) also comprises a drive means to open or close it.

15. Device (200) according to the preceding claim **characterised in that** the drive means consists of a low-power electric motor.

16. Device (200) according to the preceding claim **characterised in that** the electric motor is powered by a device that produces and/or stores electrical energy.

17. Device (200) according to claim 14 **characterised in that** the drive means consists of a rack and pinion device (601, 602) actuated by a compressed air rotary jack connected to a compressed air reserve.

18. Device (200) according to the preceding claim **characterised in that** the compressed air reserve is refilled by an air compressor powered by photovoltaic panels.

19. Device (200) according to claim 14 **characterised in that** the drive means consists of a rack and pinion device (601, 602) actuated by a single-acting hydraulic linear jack (605) controlled by a thermostat bulb (611) in thermal contact with an absorbing plate (612) exposed to the sun.

20. Device (200) according to one of claims 11 to 19 **characterised in that** the plurality of tubular elements (501) further comprise a plurality of circular fins (510) whose base is in intimate thermal contact with the wall of the tubular elements (501) in order to enhance the exchanges of heat.

21. Device (200) according to the preceding claim **characterised in that** the plurality of fins (510) is covered with a solar-absorbing coating to enhance the exchanges of heat.

22. Device (200) according to one of claims 11 to 21 **characterised in that** the plurality of tubular elements (501) are arranged horizontally in order to improve the flow of air around said tubular elements (501).

23. Device (200) according to one of claims 11 to 22 **characterised in that** the condenser (207) is of the finned tube exchanger type and cools, during the day, by natural convection of the air around said finned tubes (510).

24. Device (200) according to one of claims 5 to 10 **characterised in that** the night-time cooling of the reactor (202) is provided by a heat pipe loop that operates as a thermosiphon and comprises:

- a working fluid capable of performing thermodynamic work, said working fluid being propagated in the heat pipe loop by means of at least one conduction means (707, 708),
- an evaporator (701), a so-called heat pipe loop, which interacts with the plurality of tubular elements (501) of the reactor (202) and arranged to evaporate the working fluid and to absorb the heat released by the reactor (202);
- a condenser (702), a so-called heat pipe loop, which interacts with the evaporator (212) and the reactor (202), said condenser (702) being arranged to liquefy the working fluid and effect a transfer of heat with the outside air,
- a working fluid tank (705) arranged to store said liquid working fluid and to enable the optimal filling with working fluid of at least one tubular element (501) of the reactor (202). ,
- a passive andautonomous device for controlling the flow of the working fluid in the heat pipe loop, said device comprising:

- a first means to control the flow of working fluid (703), located between the working fluid tank (705) and the bottom of the at least one conduction means for the working fluid (707, 708), said first control means being arranged to control the liquid working fluid supply to the at least one conduction means for the working fluid (707, 708),
- a second means to control the flow of working fluid (704), located between the evaporator outlet of the heat pipe loop (701) and the condenser of the heat pipe loop (702), arranged to control the passage of gaseous working fluid in the at least one conduction means for the working fluid.

25. Device (200) according to the preceding claim **characterised in that** it further comprises a valve for starting the heat pipe loop (710), arranged to fill said heat pipe loop with working fluid and/or to drain it.

26. Device according to one of claims 24 or 25 **characterised in that** the heat pipe loop evaporator (701) comprises at least one conducting means for the working fluid arranged inside the plurality of tubular elements (501) of the reactor (202) and in intimate thermal contact with the solid reagent (502), said at least one conducting means for the working fluid associated with each tubular element (501) being connected to each other by manifolds at the top and bottom.

27. Device (200) according to one of claims 24 to 26 **characterised in that** the heat pipe loop condenser (702) is made up of at least one finned tube (510) and connected to each other by conducting means for the working fluid (707, 708).

28. Device (200) according to the preceding claim **characterised in that** the at least one finned tubes of the heat pipe loop condenser (702) are arranged substantially horizontally at the rear of the reactor (202), with a slight tilt to enable the gravity flow of the liquefied working fluid toward the working fluid tank (705).

29. Device (200) according to one of claims 24 to 28 **characterised in that** the working fluid tank (705) is arranged to maintain a minimum working fluid level in the conducting means (707, 708) for said working fluid of between one third and three quarters of the height of a tubular element (501) of the reactor (202).

30. Device (200) according to one of claims 24 to 29 **characterised in that** the working fluid tank (705) is arranged to evaporate the working fluid and also comprises the coolant condenser (207) arranged to liquefy said coolant.

31. Device (200) according to one of claims 24 to 30 **characterised in that** the device for controlling the flow of working fluid in the heat pipe loop also comprises at least one autonomous control means (706), arranged to respectively open and close the first (703) and second (704) working fluid flow control means.

32. Device (200) according to the preceding claim **characterised in that** the at least one autonomous control means of the first (703) and second (704) working fluid flow control means comprises:

- an absorbing plate (802) capable of absorbing solar radiation and to emit in the infrared, said absorbing plate (802) being arranged to heat by means of the day-time solar radiation and to cool during the night,
- a thermostat bulb (801) in thermal contact with the absorbing plate (802), comprising a fluid capable of expanding under the effect of a temperature variation,
- a connection element (804) interacting firstly with the thermostat bulb (801) and secondly with the first (703) and/or second (704) working fluid flow control means, said connection element (804) being arranged to open or close said working fluid flow control means (703, 704).

33. Device (200) according to one of claims 5 to 32 **characterised in that** it consists of a modular design made up of:

- a plurality of first sets (1001) that each comprise:

  - the reactor (202) made up of a plurality of tubular elements (501) and comprising the heat exchanger (201),
  - the condenser (207) capable of liquefying the coolant,
  - the tank (208) for storing the coolant at ambient temperature and whose volume corresponds to the volume of the plurality of tubular elements of a first set (1001),
  - control means (204, 205) for the flow of coolant,

- a second set (1002) comprising:

  - the enclosure (215) arranged to store a phase-change material (213) and comprising a thermal insulation,
  - the second tank (209) for storing the liquid coolant (217) at a temperature below ambient temperature and comprising a thermal insulation,
  - the evaporator (212) for evaporating the coolant, located in the enclosure (215) and interacting with the second tank (209),
  - first means (1003, 1004) to control the flow of coolant between the evaporator (212) and the second tank (209),
  - second means to control the flow of coolant to ensure the connection between the second set (1002) and the plurality of the first sets (1001).

34. Device (200) according to the preceding claim **characterised in that** the evaporator (212) is of the flooded type and comprises at least one tubular element arranged to circulate the coolant by thermosiphon with the second tank (209).

35. Device (200) according to one of claims 33 or 34 **characterised in that** the second set (1002) comprises a tight isolation valve (1010), arranged to fill the device (200) with coolant and/or to purge it.

36. Device (200) according to one of the preceding claims **characterised in that** the coolant is ammonia.

37. Use of the device according to one of the preceding claims for the production of cold.

38. Use of the device according to one of claims 1 to 36 for the production of water **characterised in that** the production of water is produced by condensation of water vapour contained in the air on a wall that is kept cold by the device according to one of claims 1 to 36.

FIG. 1

FIG. 2

FIG. 3

FIG. 4

FIG. 5a

FIG. 5b

FIG. 6

FIG. 7

FIG. 8a

FIG. 8b

FIG. 9a

FIG. 9c

FIG. 9b

FIG. 10

FIG. 11

1009

212

213

1008

## FIG. 12a

212

213

1008

## FIG. 12b

212    213

## FIG. 12c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4207744 A
- US 4184338 A
- US 4586345 A
- US 4993234 A
- WO 8600691 A